# EUROPEAN PATENT APPLICATION

(11) **EP 4 095 794 A1**
(43) Date of publication of application: **30.11.2022**
(21) Application number: 20914805.5
(22) Date of filing: 24.01.2020
(51) Int. Cl.: G06T 7/00, G06T 7/20

(54) **EXERCISE RECOGNITION METHOD, EXERCISE RECOGNITION PROGRAM, AND INFORMATION PROCESSING DEVICE**

(71) Applicant: FUJITSU LIMITED, Kawasaki-shi, Kanagawa 211-8588 (JP)
(72) Inventor: SATO, Takuya, Kawasaki-shi, Kanagawa 211-8588 (JP); FUJISAKI, Masataka, Fukuoka-shi, Fukuoka 814-8588 (JP); YABUKI, Akihiko, Kawasaki-shi, Kanagawa 211-8588 (JP); HONDA, Takashi, Kawasaki-shi, Kanagawa 211-8588 (JP)
(74) Representative: Hoffmann Eitle
(86) International application number: PCT/JP2020/002573
(87) International publication number: WO 2021/149250

(57) **Abstract**

A recognition device acquires skeleton information of a subject in a time series manner. The recognition device estimates a region where a specific joint is positioned using position information of a first joint group of a plurality of joints included in each piece of the time-series skeleton information. The recognition device estimates a region where a specific joint is positioned using position information of a second joint group that includes the specific joint and is a part of the first joint group of the plurality of joints included in each piece of the time-series skeleton information. The recognition device determines the region where the specific joint is positioned on the basis of each estimation result. The recognition device recognizes a motion of the subject using the time-series skeleton information and the determined region where the specific joint is positioned and outputs a recognition result.

## Description

### TECHNICAL FIELD

The present invention relates to a motion recognition method, a motion recognition program, and an information processing device.

### BACKGROUND ART

In a wide range of fields including gymnastics, medical care, or the like, a person's movement is automatically recognized using skeleton information of the person such as an athlete or a patient. For example, in the gymnastics competition, a current scoring method is a method visually performed by a plurality of referees. However, motions have been complicated and this has increased a difficulty of a technique according to advance of instruments and improvements in training methods, and a case appears where it is difficult for the referee to recognize techniques. As a result, there are concerns for keeping fairness and accuracy of scoring such as a difference in a scoring result of an athlete for each referee.

Therefore, in recent years, an automatic scoring technique using three-dimensional skeleton coordinates (hereinafter, may be referred to as "skeleton information") of an athlete has been used. For example, three-dimensional point group data of the athlete is acquired using a three-dimensional (3D) laser sensor, and the skeleton information of the athlete is calculated using the three-dimensional point group data. Then, by automatically recognizing a performed "technique" from time-series information of the skeleton information and providing an automatic scoring result to the referee, the fairness and the accuracy in scoring are guaranteed.

When such automatic recognition of the technique will be described using the pommel horse in the gymnastics competition as an example, an area around where the pommel that is one of the instruments of the pommel horse is placed is classified for each region in advance. For example, a left side of a pommel 1 is classified as a region 1, an upper side of the pommel 1 is classified as a region 2, a region between the pommel 1 and a pommel 2 is classified as a region 3, an upper side of the pommel 2 is classified as a region 4, and a right side of the pommel 2 is classified as a region 5.

Then, a skeleton of a performer is recognized from the skeleton information, and wrist support positions are estimated depending on a region where left and right wrist positions obtained from the skeleton recognition result are positioned. Then, a technique is recognized and accuracy of the technique or the like is evaluated according to rules of the technique using the time-series skeleton recognition results generated from the time-series skeleton information and the estimated wrist support positions, and scoring is automatically performed.

### SUMMARY OF INVENTION

### TECHNICAL PROBLEM

However, according to the technique described above, accuracy of skeleton recognition processing using a sensing result is deteriorated due to a case where sensing of the 3D laser sensor includes noise, a difference caused when a plurality of sensing results are integrated, or the like, and it is difficult to guarantee estimation accuracy of a position of each joint.

On the other hand, when a motion is recognized, it may be requested to accurately recognize a positional relationship between an object existing in the real world and a portion of a subject. For example, there is a case where a final motion recognition result changes depending on whether a wrist of a performer exists in a region A of the pommel horse or the wrist of the performer exists in a region B of the pommel horse, or the like. That is, even if the motion is the same, there is a case where, for example, when the hand supports the region A, a technique T is recognized, and when the hand supports the region B, a technique S is recognized.

In the technique described above, a position of a portion obtained from the skeleton recognition result is used as it is to classify a region on the object where the portion is positioned. However, in a case where the skeleton recognition result includes an error, there is case where the allocated region is not correct. For example, there is a case where, in the pommel horse, although the wrists have been allocated to the region 1 indicated in the skeleton recognition result, the hands have been originally placed on the region 2. When such a situation occurs, as a result, the motion recognition result may be erroneous, for example, the technique S is recognized as the technique T.

Therefore, in one aspect, an object of the present invention is to provide a motion recognition method, a motion recognition program, and an information processing device that improve motion recognition accuracy of using a positional relationship by improving estimation accuracy with respect to the positional relationship between a specific portion of a subject and a plurality of regions on an object existing in the real world.

### SOLUTION TO PROBLEM

According to a first proposal, in a motion recognition method, a computer executes processing for acquiring skeleton information based on position information of each of a plurality of joints including a specific joint of a subject who performs a motion, in a time series manner. In the motion recognition method, the computer executes processing for estimating the region where the specific joint is positioned of a plurality of regions obtained by dividing a region of an object used for the motion, using position information of a first joint group of the plurality of joints included in each piece of the time-series skeleton information. In the motion recognition method, the computer executes processing for estimating a region where the specific joint is positioned using position information of a second joint group that includes the specific joint and is a part of the first joint group, of the plurality of joints included in each piece of the time-series skeleton information. In the motion recognition method, the computer executes processing for determining the region where the specific joint is positioned on the basis of each estimation result in which the estimated specific joint is positioned. In the motion recognition method, the computer executes processing for recognizing the motion of the subject using the time-series skeleton information and the determined region where the specific joint is positioned and outputting a recognition result.

### ADVANTAGEOUS EFFECTS OF INVENTION

In one aspect, motion recognition accuracy using a positional relationship between a specific portion of a subject and a plurality of regions on an object that exists in the real world can be improved.

### BRIEF DESCRIPTION OF DRAWINGS

FIG. 1 is a diagram illustrating an exemplary overall configuration of a system according to a first embodiment.
FIG. 2 is a functional block diagram illustrating a functional configuration of a learning device according to the first embodiment.
FIG. 3 is a diagram for explaining a distance image.
FIG. 4 is a diagram for explaining a skeleton definition.
FIG. 5 is a diagram for explaining skeleton data.
FIG. 6 is a diagram for explaining skeleton information related to a pommel horse.
FIG. 7 is a diagram for explaining class classification.
FIG. 8 is a diagram for explaining a difference in joint movements depending on a support position at the time of lateral turning.
FIG. 9 is a diagram for explaining a difference in joint movements depending on a support position at the time when Russian is performed.
FIG. 10 is a diagram for explaining a change in a z value of an ankle depending on the support position.
FIG. 11 is a diagram for explaining generation of learning data for a full-body version model.
FIG. 12 is a diagram for explaining shaping of the learning data.
FIG. 13 is a diagram for explaining learning of the full-body version model.
FIG. 14 is a diagram for explaining generation of learning data for a part version model.
FIG. 15 is a diagram for explaining learning of the part version model.
FIG. 16 is a functional block diagram illustrating a functional configuration of a recognition device according to the first embodiment.
FIG. 17 is a diagram illustrating an example of selection information.
FIG. 18 is a diagram for explaining estimation of a support position according to the full-body version model.
FIG. 19 is a diagram illustrating a list of support position estimation results according to the full-body version model.
FIG. 20 is a diagram illustrating a list of recognition results using the full-body version model.
FIG. 21 is a diagram for explaining estimation of a support position according to the part version model.
FIG. 22 is a diagram illustrating a list of support position estimation results using the part version model.
FIG. 23 is a diagram illustrating a list of recognition results using the part version model.
FIG. 24 is a diagram illustrating selection of estimation results.
FIG. 25 is a diagram for explaining an estimation result to be integrated, of the support position estimation results according to the full-body version model.
FIG. 26 is a diagram for explaining an estimation result to be integrated, of the support position estimation results according to the part version model.
FIG. 27 is a diagram for explaining integration of the support positions.
FIG. 28 is a diagram for explaining a re-recognition result of an integrated technique.
FIG. 29 is a functional block diagram illustrating a functional configuration of a scoring device according to the first embodiment.
FIG. 30 is a flowchart illustrating a flow of learning processing according to the first embodiment.
FIG. 31 is a flowchart illustrating a flow of automatic scoring processing according to the first embodiment.
FIG. 32 is a flowchart illustrating a flow of class classification processing.
FIGs. 33A and 33B illustrate a flowchart for explaining a flow of integration processing.
FIG. 34 is a diagram for explaining integration processing according to a second embodiment.
FIG. 35 is a diagram for explaining a hardware configuration example.

### DESCRIPTION OF EMBODIMENTS

Hereinafter, embodiments of a motion recognition method, a motion recognition program, and an information processing device according to the present invention will be described in detail with reference to the drawings. Note that the embodiments do not limit the present invention. Furthermore, each of the embodiments may be appropriately combined within a range without inconsistency.

### [First Embodiment]

### [Overall Configuration]

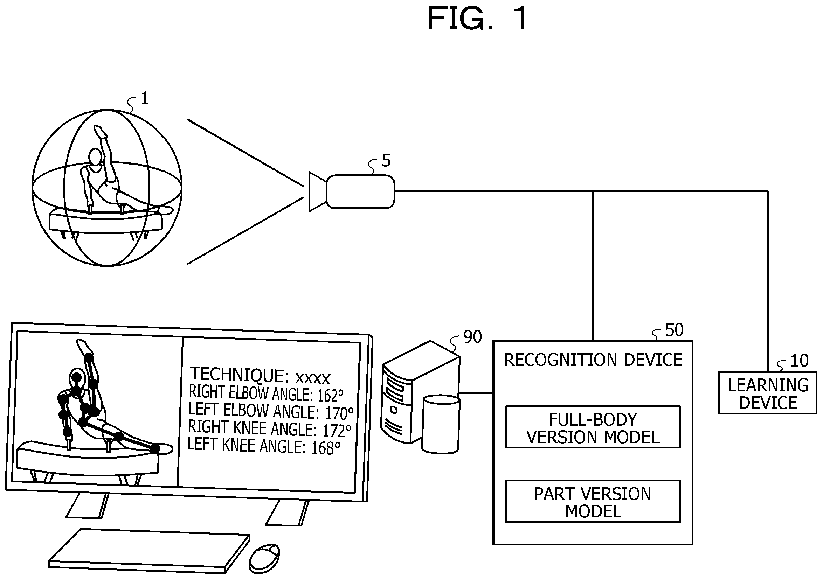

FIG. 1 is a diagram illustrating an exemplary overall configuration of a system according to a first embodiment. As illustrated in FIG. 1, this system is a system that includes a three-dimensional (3D) laser sensor 5, a learning device 10, a recognition device 50, and a scoring device 90, captures three-dimensional data of a performer 1 who is a subject, and recognizes a skeleton or the like to accurately score techniques. Note that, in the present embodiment, as an example, an example will be described in which skeleton information of a performer who performs the pommel horse is recognized using the pommel horse that is the gymnastics competition as an example.

Generally, the current scoring method in gymnastics competition is visually performed by a plurality of graders. However, with sophistication of techniques, there are increasing cases where it is difficult for the graders to visually score performance. In recent years, an automatic scoring system and a scoring support system for scoring competitions using the 3D laser sensor 5 have been known. For example, in these systems, the 3D laser sensor 5 acquires a distance image, which is three-dimensional data of an athlete, and recognizes a skeleton, which is, for example, an orientation of each joint and an angle of each joint of the athlete from the distance image. Then, in the scoring support system, a result of skeleton recognition is displayed as a 3D model so that the graders are supported to carry out more precise scoring by, for example, checking a detailed situation of the performer. Furthermore, in the automatic scoring system, a performed technique or the like is recognized from the result of skeleton recognition, and scoring is performed according to a scoring rule.

Here, due to a case where noise is included in sensing of the 3D laser sensor 5 or the like, accuracy of skeleton recognition processing using the sensing result is deteriorated, and there is a case where it is difficult to guarantee joint position estimation accuracy. However, because the deterioration in the joint position estimation accuracy in the automatic scoring system deteriorates reliability of the system, efforts to reduce an effect of the noise and to suppress the deterioration in the estimation accuracy are important.

Therefore, by introducing the artificial intelligence (AI) technology to the estimation of the joint position of the performer 1, the effect of the noise is reduced, and estimation accuracy for a positional relationship between the joint position of the performer 1 and each region on the pommel horse that exists in the real world is improved.

For example, by using a classification model that estimates a position of a specific joint from joint positions of the whole body of the performer 1 by learning a time-series change in the skeleton information of the performer as a feature, it is possible to improve estimation accuracy for estimating the position of the specific joint of the performer 1 and technique recognition accuracy.

However, in a case where such a classification model that estimates the specific joint position from the joint positions of the whole body is used, estimation accuracy of the skeleton information regarding the movement and the posture used for learning can be improved. However, there is a possibility that estimation accuracy regarding an unknown posture and movement is lowered.

Therefore, in the first embodiment, by estimating a specific joint position of the performer 1 using both of a full-body version model learned using the joint positions of the whole body and a part version model learned using some joint positions, estimation accuracy regarding various movements is improved.

Note that the full-body version model is a model relating to a first joint group that corresponds to an almost whole body, of the joints of the whole body. In the following embodiment, the first joint group includes 18 joints defined as joints configuring the skeleton of the whole body.

Furthermore, the part version model is a model relating to a partial joint group that includes at least a specific joint of the plurality of joints. Furthermore, the part version model is a model that further relates to a second joint group that corresponds to a part of the first joint group. In the following embodiment, the second joint group includes six joints including at least both wrist joints.

By using such two models, even in a case where it is suspected that noise is mixed into sensing of the 3D laser sensor or a movement, a technique, or the like that is not used for learning is performed, the recognition device 50 can accurately estimate the joint position and can improve technique recognition accuracy in a performance of the performer 1. As a result, the deterioration in the reliability of the automatic scoring system can be suppressed.

### [Functional Configuration]

Next, a functional configuration of each device included in the system illustrated in FIG. 1 will be described. Note that, here, each of the learning device 10, the recognition device 50, and the scoring device 90 will be described.

### (Configuration of Learning Device 10)

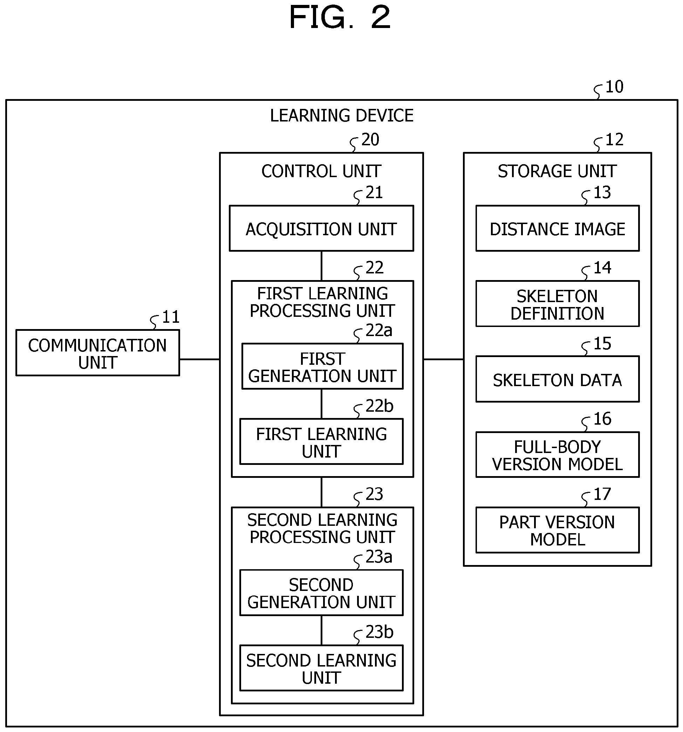

FIG. 2 is a functional block diagram illustrating a functional configuration of the learning device 10 according to the first embodiment. As illustrated in FIG. 2, the learning device 10 includes a communication unit 11, a storage unit 12, and a control unit 20.

The communication unit 11 is a processing unit that controls communication with another device, and is implemented by, for example, a communication interface or the like. For example, the communication unit 11 receives a distance image of the performer 1 captured by the 3D laser sensor 5, receives various types of data and instructions from an administrator's terminal or the like, and transmits each learned model to the recognition device 50.

The storage unit 12 stores data, a program executed by the control unit 20, or the like. This storage unit 12 stores a distance image 13, a skeleton definition 14, skeleton data 15, a full-body version model 16, and a part version model 17. Note that the storage unit 12 is implemented, for example, by a memory, a hard disk, or the like.

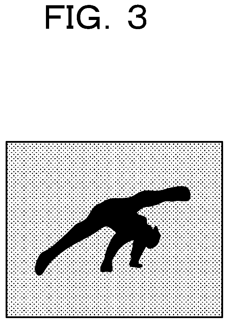

The distance image 13 is a distance image of the performer 1 captured by the 3D laser sensor 5. FIG. 3 is a diagram for explaining the distance image 13. As illustrated in FIG. 3, the distance image 13 is data including a distance from the 3D laser sensor 5 to a pixel, and the closer the distance from the 3D laser sensor 5 is, the darker a color is displayed. Note that the distance image 13 is captured at any time during the performance of the performer 1.

The skeleton definition 14 is definition information used to specify each joint of a skeleton model. The definition information stored here may be measured for each performer through 3D sensing with the 3D laser sensor or may be defined using a skeleton model with a general body shape.

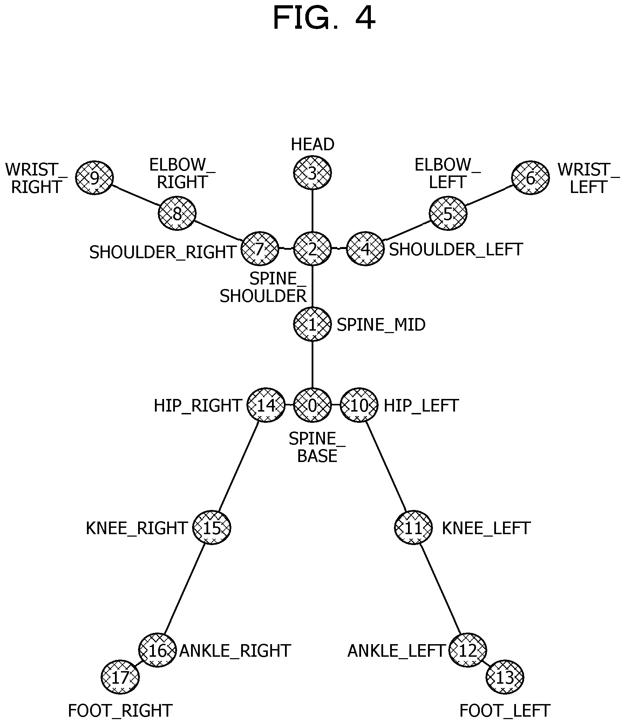

FIG. 4 is a diagram for explaining the skeleton definition 14. As illustrated in FIG. 4, the skeleton definition 14 stores 18 pieces of (numbers 0 to 17) definition information in which each of joints specified by a known skeleton model is numbered. For example, as illustrated in FIG. 4, a right shoulder joint (SHOULDER_RIGHT) is assigned with number 7, a left elbow joint (ELBOW_LEFT) is assigned with number 5, a left knee joint (KNEE_LEFT) is assigned with number 11, and a right hip joint (HIP_RIGHT) is assigned with number 14. Here, in the embodiment, for the right shoulder joint with number 7, an X coordinate is described as X7, a Y coordinate is described as Y7, and a Z coordinate is described as Z7 in some cases. Note that, for example, a Z axis can be defined as a distance direction from the 3D laser sensor 5 toward a target, a Y axis can be defined as a height direction perpendicular to the Z axis, and an X axis can be defined as a horizontal direction.

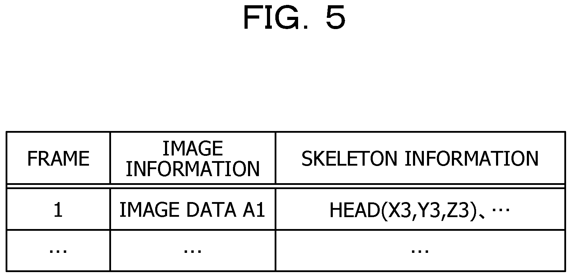

The skeleton data 15 is data including information regarding a skeleton generated using each distance image. Specifically, the skeleton data 15 includes a position of each joint defined by the skeleton definition 14 acquired using the distance image. FIG. 5 is a diagram for explaining the skeleton data 15. As illustrated in FIG. 5, the skeleton data 15 is information in which "a frame, image information, and skeleton information" are associated.

Here, the "frame" is an identifier used to identify each frame imaged by the 3D laser sensor 5, and the "image information" is data of a distance image of which a position of a joint or the like is known. The "skeleton information" is three-dimensional position information of a skeleton, and represents the joint positions (three-dimensional coordinates) corresponding to the 18 joints illustrated in FIG. 4. The example of FIG. 5 illustrates that the positions of the 18 joints including the coordinates "X3, Y3, Z3" of HEAD or the like are known in "image data A1" that is a distance image. Note that the joint position can be extracted using a learning model, for example, which is a learning model learned in advance and that is a learning model that extracts each joint position from the distance image or the like.

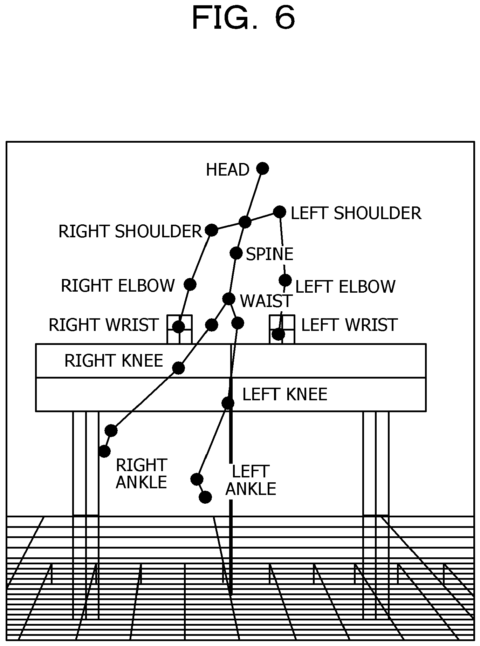

Here, in a performance of the pommel horse targeted in the present embodiment, the 18 joints can be used. However, only joints particularly related the performance of the pommel horse can be used. FIG. 6 is a diagram for explaining skeleton information related to the pommel horse. As illustrated in FIG. 6, as the skeleton information (joint) largely related to the performance of the pommel horse, the head, the right shoulder, the left shoulder, the spine, the right elbow, the left elbow, the right wrist, the left wrist, the waist, the right knee, the left knee, the right ankle, and the left ankle are exemplified.

The head indicates a motion for raising or lowering the head. The shoulder indicates a positional relationship between a body trunk and an arm. The spine indicates bending of the body and indicates piked and layout of the gymnastics. The elbow indicates a bending way of the arm and how a force is applied. The wrist indicates a position where an object is grabbed or the like. The waist indicates the approximate center of gravity of the body. The knee indicates a relationship between the body trunk and a leg and can specify a difference between straddle and legs together. The ankle indicates trajectories of a walking state, a running state, and a pommel horse rotation motion.

In the competition of the pommel horse, a performance performed in a state where the pommel is grabbed by the hand and a performance performed in a state where the hand is placed on the leather are mixedly included, and even if the same motions are made, a technique or a difficulty changes depending on the position of the hand. On the other hand, because the pommels exist on the leather, it is difficult to automatically determine whether the hand is positioned on the pommel or the leather in the series of performances according to only the positions of the hands. Therefore, in the first embodiment, by estimating the position of the hand particularly considering a raising width of the ankle or the like from the motion of the joints illustrated in FIG. 6, the joint position estimation accuracy is improved.

The full-body version model 16 is a learning model that estimates the positions of the wrists of the performer 1 on the basis of the time-series skeleton information of the whole body and is a model using a neural network learned by a first learning processing unit 22 to be described later or the like. That is, the full-body version model 16 estimates the support positions of the wrists of the performer 1 by classifying positions on the pommel horse into a plurality of classes and learning a time-series change in the skeleton information of the whole body of the performer 1 as a feature amount.

Furthermore, the part version model 17 is a learning model that estimates the positions of the wrists of the performer 1 on the basis of partial time-series skeleton information and is a model using a neural network learned by a second learning processing unit 23 to be described later or the like. That is, the part version model 17 estimates the support positions of the wrists of the performer 1 by classifying the positions on the pommel horse into a plurality of classes and learning a time-series change in the partial skeleton information of the performer 1 as a feature amount.

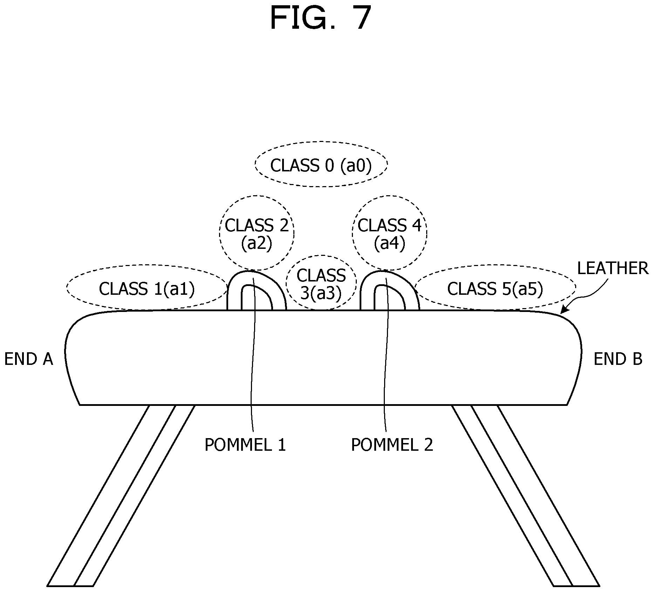

FIG. 7 is a diagram for explaining class classification. As illustrated in FIG. 7, in the first embodiment, as an example, an example will be described in which a region is divided into 6 classes including a class 0 to a class 5. Specifically, the class 1 (a1) is a region of the leather between an end A and the pommel 1, and the class 2 (a2) is a region on the pommel 1. The class 3 (a3) is a region of the leather between the pommels 1 and 2, and the class 4 (a4) is a region on the pommel 2. The class 5 is a region of the leather between the pommel 2 and an end B, and the class 0 (a0) is a region other than the class 1 to the class 5.

The control unit 20 is a processing unit that controls the entire learning device 10 and can be implemented by, for example, a processor or the like. The control unit 20 includes an acquisition unit 21, the first learning processing unit 22, and the second learning processing unit 23 and learns each model. Note that the acquisition unit 21, the first learning processing unit 22, and the second learning processing unit 23 can be implemented by an electronic circuit such as a processor or a process included in a processor or the like.

The acquisition unit 21 is a processing unit that acquires various types of data. For example, the acquisition unit 21 acquires a distance image from the 3D laser sensor 5 and stores the distance image in the storage unit 12. Furthermore, the acquisition unit 21 acquires skeleton data from the administrator's terminal or the like and stores the skeleton data in the storage unit 12.

The first learning processing unit 22 and the second learning processing unit 23 learn the full-body version model 16 or the part version model 17 using the time-series skeleton information as the feature amount.

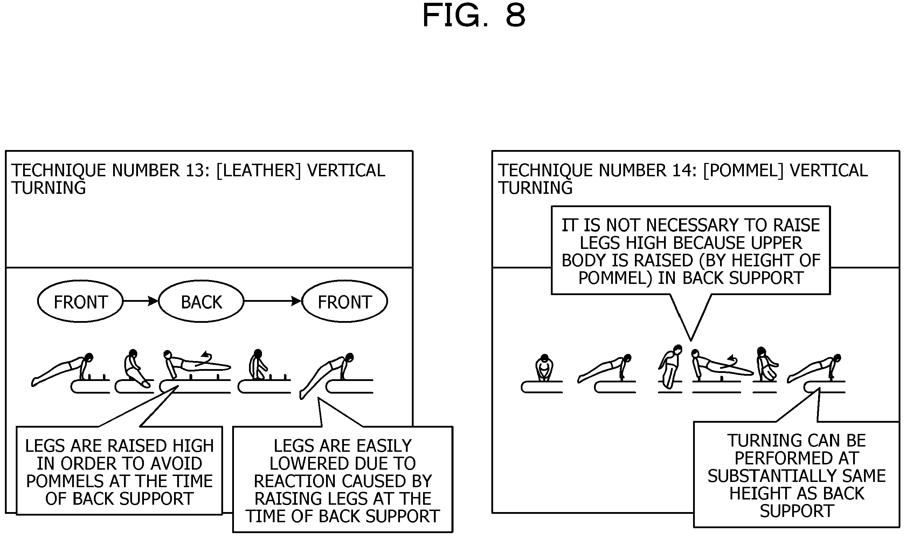

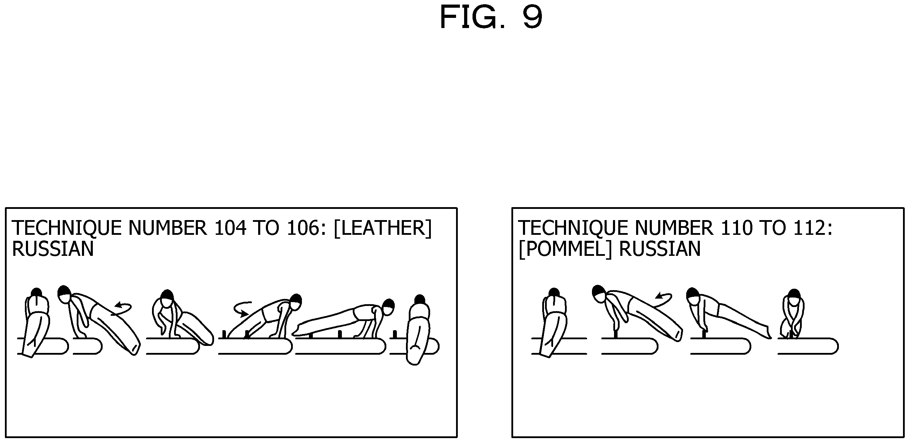

Here, as a reason for learning the time-series skeleton information as the feature amount, a difference in joint movements depending on a support position will be described. FIG. 8 is a diagram for explaining a difference in joint movements depending on a support position at the time of lateral turning, and FIG. 9 is a diagram for explaining a difference in joint movements depending on a support position at the time when Russian is performed.

As illustrated in FIG. 8, vertical turning is a motion for turning in an order of front support, back support, and front support. As indicated by a technique number 13, in the vertical turning in which the wrist support positions are on the leather position, the legs are raised high in order to avoid the pommels at the time of back support, and at the time of front support thereafter, the legs are easily lowered due to the reaction caused by raising the legs at the time of back support. On the other hand, as indicated by a technique number 14, in the vertical turning in which the wrist support positions are on the pommel, it is unnecessary to raise the legs high because the upper body is raised by the height of the pommel in the back support, the turning can be performed at substantially the same height as the back support, in the front support thereafter. In other words, a change amount of the z value of the ankle changes depending on the wrist support positions.

Furthermore, as illustrated in FIG. 9, Russian is a motion in which the direction changes according to the turn in downward support. As indicated by technique numbers 104 to 106, in Russian in which the wrist support positions are on the leather position, turning is performed around the hands placed on the leather as an axis, and accordingly, the positions of the feet are lower than the leather. As indicated by technique numbers 110 to 112, in Russian in which the wrist support positions are on the pommel, turning is performed around the hand placed on the pommel as an axis, and accordingly, the positions of the feet are higher than those in Russian in which the wrist support positions are on the leather position. In other words, a change amount of the z value of the ankle changes depending on the wrist support positions.

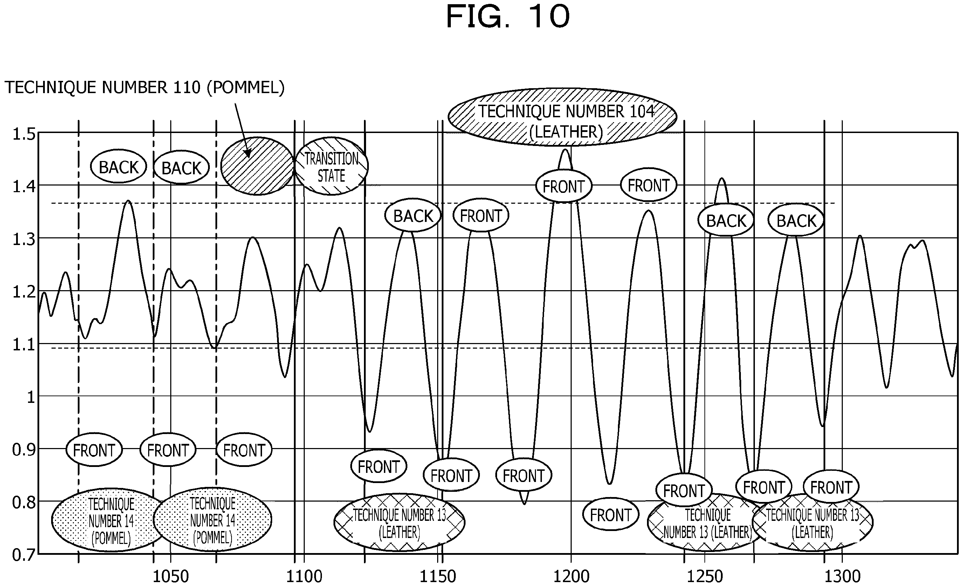

Next, a change of the z value of the ankle will be specifically described. FIG. 10 is a diagram for explaining the change of the z value of the ankle depending on the support position. In FIG. 10, the z value of the ankle when vertical turning with the pommel (technique number 14), Russian with the pommel (technique number 110), vertical turning with the leather (technique number 13), and Russian with the leather (technique number 104) are performed in order is illustrated. As illustrated in FIG. 10, the change (amplitude) of the z value of the ankle in a case where the pommel is assumed as the support position is small, and the change in the z value of the ankle in a case where the support position is on the leather is large. That is, it can be considered that the support position estimation accuracy is improved by learning the change of the z value.

Returning to FIG. 2, the first learning processing unit 22 is a processing unit that includes a first generation unit 22a and a first learning unit 22b and generates the full-body version model 16 through machine learning.

The first generation unit 22a is a processing unit that generates learning data used to learn the full-body version model 16. Specifically, the first generation unit 22a generates learning data using the time-series skeleton information of the whole body (18 joints) as an explanatory variable and the wrist support positions (class) as an objective variable, stores the learning data in the storage unit 12, and outputs the learning data to the first learning unit 22b.

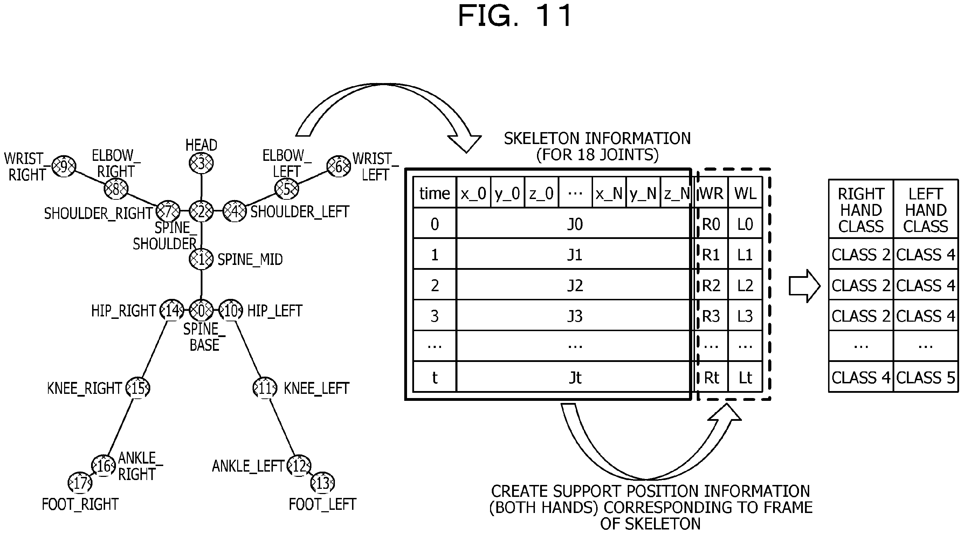

FIG. 11 is a diagram for explaining generation of the learning data for the full-body version model 16. As illustrated in FIG. 11, the first generation unit 22a refers to skeleton information of the skeleton data 15, and assigns "WR" indicating the coordinates of the right hand support position and "WL" indicating the coordinates of the left hand support position to the skeleton information of each frame as both-hand support position information.

For example, the first generation unit 22a acquires a coordinate value (R0) of the right wrist (joint position = 9) and a coordinate value (L0) of the left wrist (joint position = 6) from the skeleton information for skeleton information (J0) of a frame of time = 0. Thereafter, the first generation unit 22a compares the coordinate value (R0) of the right wrist and the coordinate value (L0) of the left wrist and a coordinate value belonging to each class of the pommel horse that has been preset, and sets a right hand class (class 2) and a left hand class (class 4).

Similarly, the first generation unit 22a acquires a coordinate value (R1) of the right wrist and a coordinate value (L1) of the left wrist from the skeleton information for skeleton information (J1) of a frame of time = 1. Thereafter, the first generation unit 22a compares the coordinate value (R1) of the right wrist and the coordinate value (L1) of the left wrist and a coordinate value belonging to each class, and sets the right hand class (class 2) and the left hand class (class 4).

In this way, the first generation unit 22a assigns the right hand class and the left hand class that are correct answer information to the skeleton information of each frame acquired in a time-series manner. Note that, in FIG. 11, for simple description, the skeleton information is described as J0 or the like. However, in reality, the coordinates of x, y, and z values are set for each of the 18 joints (18 × 3 = 54 in total).

The first learning unit 22b is a processing unit that learns the full-body version model 16 using the learning data generated by the first generation unit 22a. Specifically, the first learning unit 22b optimizes a parameter of the full-body version model 16 through supervised learning using the learning data. Then, the first learning unit 22b stores the learned full-body version model 16 in the storage unit 12 and transmits the full-body version model 16 to the recognition device 50. Note that a timing to end the learning can be freely set, such as a point of time when learning using a predetermined number or more of pieces of learning data is completed or a point of time when a restoration error falls below a threshold.

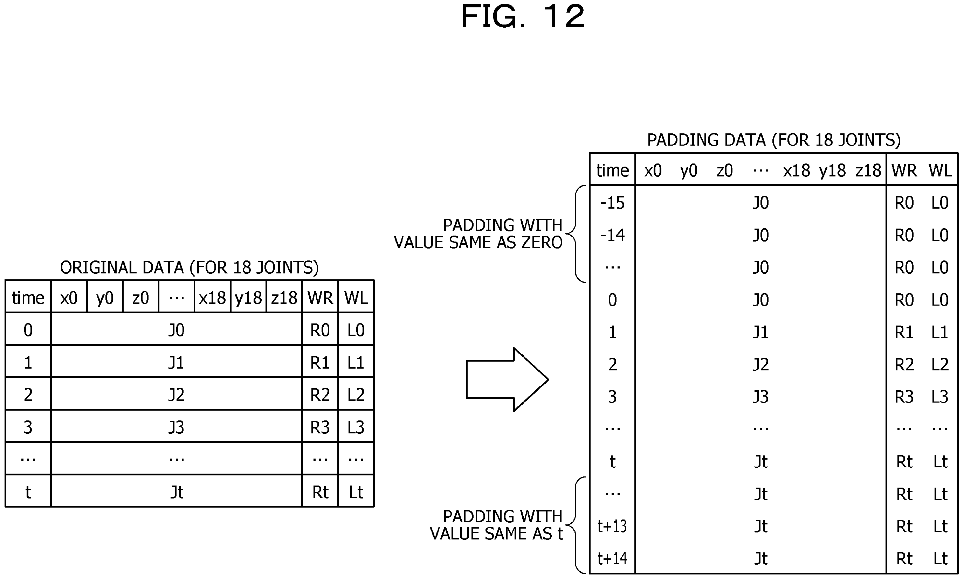

Because such a first learning unit 22b inputs, for example, 30 frames as a single piece of input data into the full-body version model 16 as the time-series skeleton information of the 18 joints, the first learning unit 22b shapes the learning data through padding or the like. FIG. 12 is a diagram for explaining shaping of the learning data. As illustrated in FIG. 12, in a case where a predetermined number of pieces of learning data is acquired from original data, in which t pieces of skeleton information from the frame 0 of time = 0 to a frame t of time = t exists, as shifting the data one by one, in order to match the number of pieces of each learning data, data of a first frame is copied and data of a final frame is copied so as to increase the number of pieces of learning data.

For example, the first learning unit 22b copies data of the frame 0 "skeleton information (J0)" and the support position information "WR (R0), WL (L0)" to a frame previous to the frame 0 and generates a frame (- 1), a frame (-2), or the like. Similarly, the first learning unit 22b copies data of the frame t "skeleton information (Jt)" and support position information "WR (Rt), WL (Lt)" to a frame after the frame t and generates a frame (t + 1), a frame (t + 2), or the like. Note that the number of paddings is set to a half of the number of frames (length) used for learning or the like.

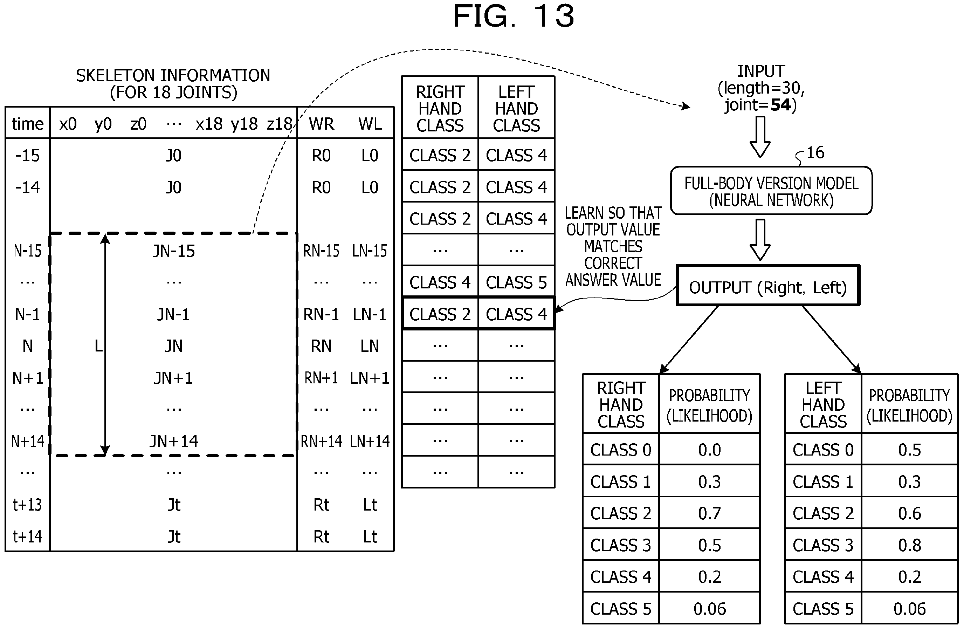

In this way, the first learning unit 22b learns the full-body version model 16 after shaping the learning data. FIG. 13 is a diagram for explaining learning of the full-body version model 16. As illustrated in FIG. 13, the first learning unit 22b acquires learning data of L (for example, 30) pieces of time-series skeleton information of the whole body (18 joints) as an explanatory variable and acquires "right hand class and left hand class" of the learning data positioned in the middle as an objective variable. Then, the first learning unit 22b inputs the L pieces of learning data into the full-body version model 16 and learns the full-body version model 16 so that the output result matches the objective variable, for example, through error back propagation based on an error between the output result of the full-body version model 16 and the objective variable "right hand class, left hand class".

For example, the first learning unit 22b acquires skeleton information of 30 frames from a frame (N - 15) to a frame (N - 14) having a frame N in the middle as an explanatory variable and acquires "right hand class (class 2) and left hand class (class 4)" of the frame N as an objective variable. Then, the first learning unit 22b inputs the acquired 30 frames into the full-body version model 16 as a single piece of input data and acquires a probability (likelihood) that the right hand class falls under each class and a probability (likelihood) that the left hand class falls under each class as the output result of the full-body version model 16.

Thereafter, the first learning unit 22b learns the full-body version model 16 so that a probability of the class 2 that is an objective variable is the highest among the probabilities of the right hand class and a probability of the class 4 that is an objective variable is the highest among the probabilities of the left hand class. Note that to learn the full-body version model 16 is, for example, to update various parameters of the neural network using, for example, the error back propagation or the like.

In this way, the first learning unit 22b learns a change in all the pieces of skeleton information for 18 joints as a single feature amount by learning the learning data in which the learning data is shifted frame by frame. For example, in a case where a range is assumed as ± 10 frames and class classification of a 1280-th frame is recognized, the first learning unit 22b inputs skeleton information of "20 × (18 joints × 3 axes (x, y, z) = 54) = 1080" between a 1270-th frame and a 1290-th frame and learns the full-body version model 16. Furthermore, in a case where class classification of a 1310-th frame is recognized, the first learning unit 22b inputs skeleton information of "20 × (18 joints × 3 axes (x, y, z) = 54) = 1080" between a 1300-th frame and a 1320-th frame and learns the full-body version model 16.

Returning to FIG. 2, the second learning processing unit 23 is a processing unit that includes a second generation unit 23a and a second learning unit 23b and generates the part version model 17 through machine learning.

The second generation unit 23a is a processing unit that generates learning data used to learn the part version model 17. Specifically, the second generation unit 23a generates learning data using the time-series skeleton information of some joints as an explanatory variable and the wrist support positions (class) as an objective variable, stores the learning data in the storage unit 12, and outputs the learning data to the second learning unit 23b.

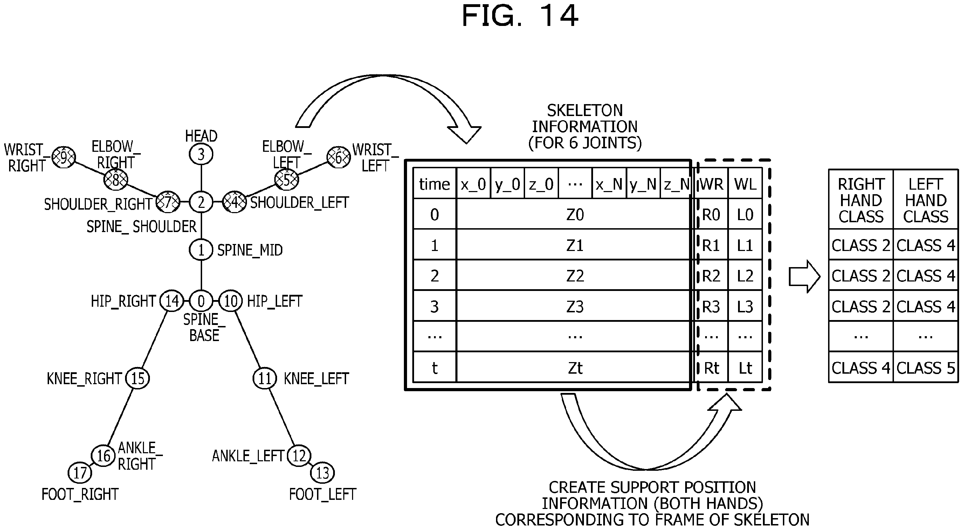

FIG. 14 is a diagram for explaining generation of the learning data for the part version model 17. As illustrated in FIG. 14, for learning of the part version model 17, skeleton information of six joints including a joint number 4 (SHOULDER_LEFT), a joint number 5 (ELBOW_LEFT), a joint number 6 (WRIST_LEFT), a joint number 7 (SHOULDER_RIGHT), a joint number 8 (ELBOW_RIGHT), and a joint number 9 (WRIST_RIGHT) is adopted. Specifically, as illustrated in FIG. 14, the second generation unit 23a acquires the skeleton information of the six joints described above from the skeleton information of the skeleton data 15 and assigns "WR" indicating the coordinates of the right hand support position and "WL" indicating the coordinates of the left hand support position to the skeleton information of the six joints for each frame as the both-hand support position information.

For example, the second generation unit 23a acquires a coordinate value (R0) of the right wrist (joint position = 9) and a coordinate value (L0) of the left wrist (joint position = 6) from the skeleton information for skeleton information (Z0) for the six joints of the frame of time = 0. Thereafter, the second generation unit 23a compares the coordinate value (R0) of the right wrist and the coordinate value (L0) of the left wrist and a coordinate value belonging to each class of the pommel horse that has been preset, and sets a right hand class (class 2) and a left hand class (class 4).

In this way, the second generation unit 23a assigns the right hand class and the left hand class that are correct answer information to the skeleton information for the six joints described above of each frame acquired in time-series manner. Note that, in FIG. 14, for simple description, the skeleton information is described as Z0 or the like. However, in reality, the coordinates of x, y, and z values for each of the 6 joints (6 × 3 = 18 in total) are set.

The second learning unit 23b is a processing unit that learns the part version model 17 using the learning data generated by the second generation unit 23a. Specifically, the second learning unit 23b optimizes a parameter of the part version model 17 through supervised learning using the learning data. Then, the second learning unit 23b stores the learned part version model 17 in the storage unit 12 and transmits the part version model 17 to the recognition device 50. Note that a timing to end the learning can be set to the timing similar to that of the full-body version model 16.

Because such a second learning unit 23b inputs, for example, 30 frames as a single piece of input data into the part version model 17 as the time-series skeleton information of the six joints, the second learning unit 23b generates padding data from original data with a method similar to the first learning unit 22b and increases the number of pieces of learning data.

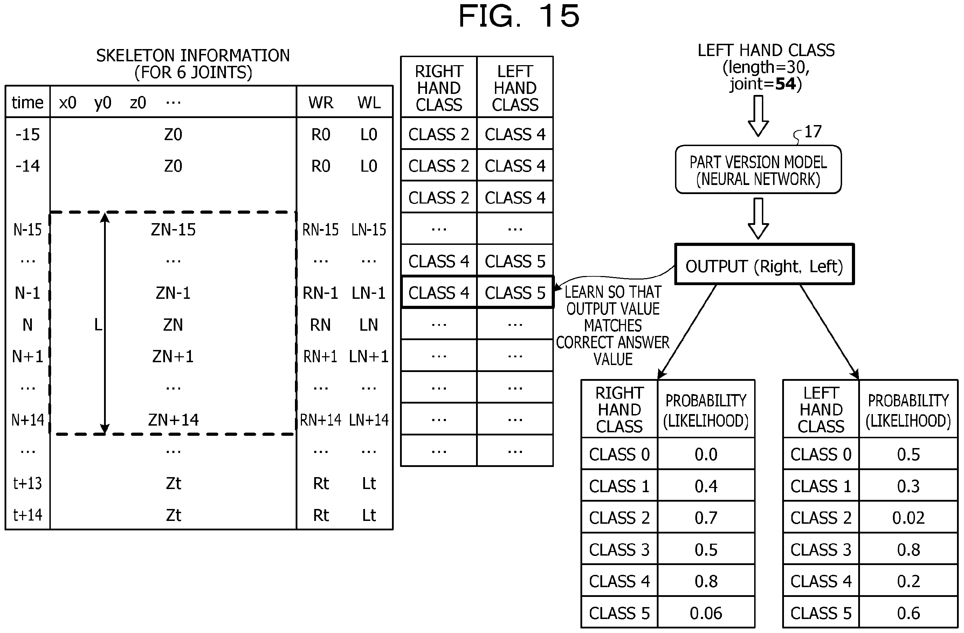

Then, the second learning unit 23b learns the part version model 17 after shaping the learning data. FIG. 15 is a diagram for explaining learning of the part version model 17. As illustrated in FIG. 15, the second learning unit 23b acquires L (for example, 30) pieces of learning data of the time-series skeleton information for the six joints as many as that at the time of learning the full-body version model 16 as an explanatory variable and acquires "right hand class and left hand class" of the learning data positioned in the middle as an objective variable. Then, the second learning unit 23b inputs the L pieces of learning data into the part version model 17 and learns the part version model 17 so that the output result matches the objective variable through error back propagation based on an error between the output result of the part version model 17 and the objective variable "right hand class and left hand class", or the like.

For example, the second learning unit 23b acquires skeleton information for six joints of 30 frames from the frame (N - 15) to the frame (N - 14) having the frame N in the middle as an explanatory variable and acquires "right hand class (class 4) and left hand class (class 5)" of the frame N as an objective variable. Then, the second learning unit 23b inputs the acquired 30 frames (skeleton information of six joints) into the part version model 17 as a single piece of input data and acquires a probability (likelihood) that the right hand class falls under each class and a probability (likelihood) that the left hand class falls under each class as the output result of the part version model 17.

Thereafter, the second learning unit 23b learns the part version model 17 so that a probability of the class 4 that is an objective variable is the highest among the probabilities of the right hand class and a probability of the class 5 that is an objective variable is the highest among the probabilities of the left hand class. In this way, similarly to the full-body version model 16, the second learning unit 23b learns a change in some pieces of skeleton information for six joints as a single feature amount by learning the learning data in which the learning data is shifted frame by frame.

### (Configuration of Recognition Device 50)

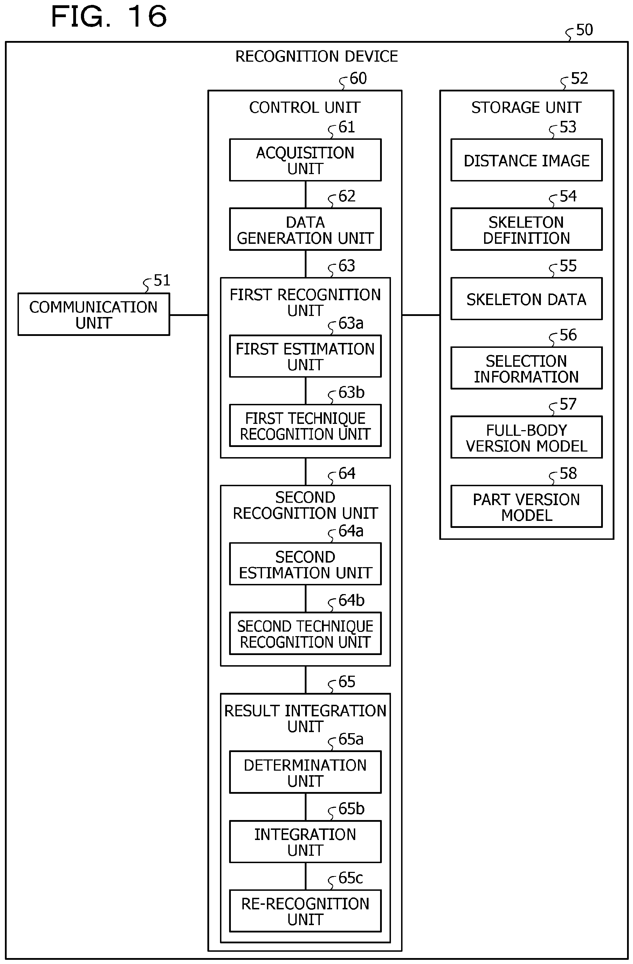

FIG. 16 is a functional block diagram illustrating a functional configuration of the recognition device 50 according to the first embodiment. As illustrated in FIG. 16, the recognition device 50 includes a communication unit 51, a storage unit 52, and a control unit 60.

The communication unit 51 is a processing unit that controls communication with another device, and is implemented by, for example, a communication interface or the like. For example, the communication unit 51 receives the distance image of the performer 1 captured by the 3D laser sensor 5, receives each learned model from the learning device 10, and transmits various recognition results to the scoring device 90.

The storage unit 52 stores data, a program executed by the control unit 60, or the like. This storage unit 52 stores a distance image 53, a skeleton definition 54, skeleton data 55, selection information 56, a learned full-body version model 57, and a learned part version model 58. Note that the storage unit 52 is implemented, for example, by a memory, a hard disk, or the like.

The distance image 53 is a distance image of the performer 1 captured by the 3D laser sensor 5 and is, for example, a distance image obtained by capturing a performance of a performer to be scored. The skeleton definition 54 is definition information used to specify each joint on the skeleton model. Note that, because the skeleton definition 54 is similar to that in FIG. 4, detailed description will be omitted.

The skeleton data 55 is data including information regarding a skeleton generated for each frame by a data generation unit 62 to be described later. Specifically, as in FIG. 5, the skeleton data 55 is information in which "a frame, image information, and skeleton information" are associated.

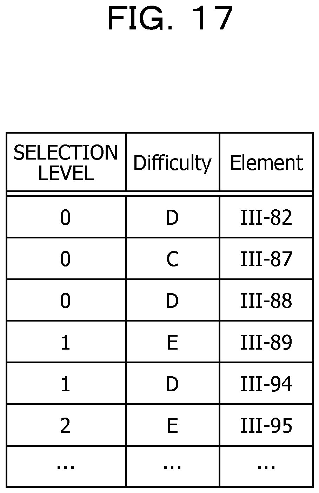

The selection information 56 is information that defines a priority of a technique or the like. FIG. 17 is a diagram illustrating an example of selection information. As illustrated in FIG. 17, the selection information 56 is information in which "selection level", "Difficulty", and "Element" are associated with each other. Here, the "selection level" indicates a priority, the "Difficulty" indicates a difficulty of a technique, and the "Element" is information that specifies a technique. In the example in FIG. 17, it is indicated that a selection level of a technique "111-82" of which a difficulty is "D" is "0", a selection level of a technique "111-89" of which a difficulty is "E" is "1", and the technique "111-89" is more preferentially selected than the technique "111-82".

Note that, for example, the selection information 56 may be a list describing unlearned techniques and priorities at the time of selection, and a difference value of the joint coordinates from the learning data may be set as a threshold used to determine whether or not a skeleton is unlearned. Note that the difference of the joint coordinates may be, for example, a difference in relative positions of the respective joints with reference to the waist.

The full-body version model 57 is a learning model that performs prediction using skeleton information of the whole body and is generated through machine learning by the learning device 10. This full-body version model 57 is a learning model that estimates the wrist positions of the performer 1 on the basis of the time-series skeleton information of the whole body (18 joints).

The part version model 58 is a learning model that performs prediction using some pieces of skeleton information and is generated through machine learning by the learning device 10. This part version model 58 is a learning model that estimates the wrist positions of the performer 1 on the basis of the time-series skeleton information for six joints.

The control unit 60 is a processing unit that controls the entire recognition device 50 and can be implemented by, for example, a processor or the like. This control unit 60 includes an acquisition unit 61, a data generation unit 62, a first recognition unit 63, a second recognition unit 64, a result integration unit 65 and estimates wrist positions and recognizes a technique performed by the performer 1. Note that the acquisition unit 61, the data generation unit 62, the first recognition unit 63, the second recognition unit 64, and the result integration unit 65 can be implemented by an electronic circuit such as a processor or a process included in a processor or the like.

The acquisition unit 61 is a processing unit that acquires various types of data and various instructions. For example, the acquisition unit 61 acquires a distance image based on a measurement result (three-dimensional point group data) by the 3D laser sensor 5 and stores the distance image in the storage unit 52. Furthermore, the acquisition unit 61 acquires each learned model from the learning device 10 or the like and stores the learned model in the storage unit 52.

The data generation unit 62 is a processing unit that generates skeleton information including positions of 18 joints from each distance image. For example, the data generation unit 62 generates skeleton information that specifies the 18 joint positions using a learned model for recognizing the skeleton information from the distance image. Then, the data generation unit 62 stores the skeleton data 55, in which a frame number corresponding to the distance image, the distance image, and the skeleton information are associated, in the storage unit 52. Furthermore, the skeleton information of the skeleton data 15 for the learning device 10 can be generated according to the similar method.

The first recognition unit 63 is a processing unit that includes a first estimation unit 63a and a first technique recognition unit 63b, estimates wrist support positions that are specific skeleton information from skeleton information of the whole body, and recognizes a technique performed by the performer 1 on the basis of the result.

The first estimation unit 63a is a processing unit that estimates the wrist support positions of the performer 1 using the time-series skeleton information of the whole body of the performer 1 and the learned full-body version model 57. Specifically, the first estimation unit 63a inputs frames as many as the frames at the time of learning as a single piece of input data into the learned full-body version model 57 and estimates the wrist support positions of the performer 1 on the basis of the output result of the learned full-body version model 57. Furthermore, the first estimation unit 63a outputs the estimation result to the first technique recognition unit 63b and stores the estimation result in the storage unit 52.

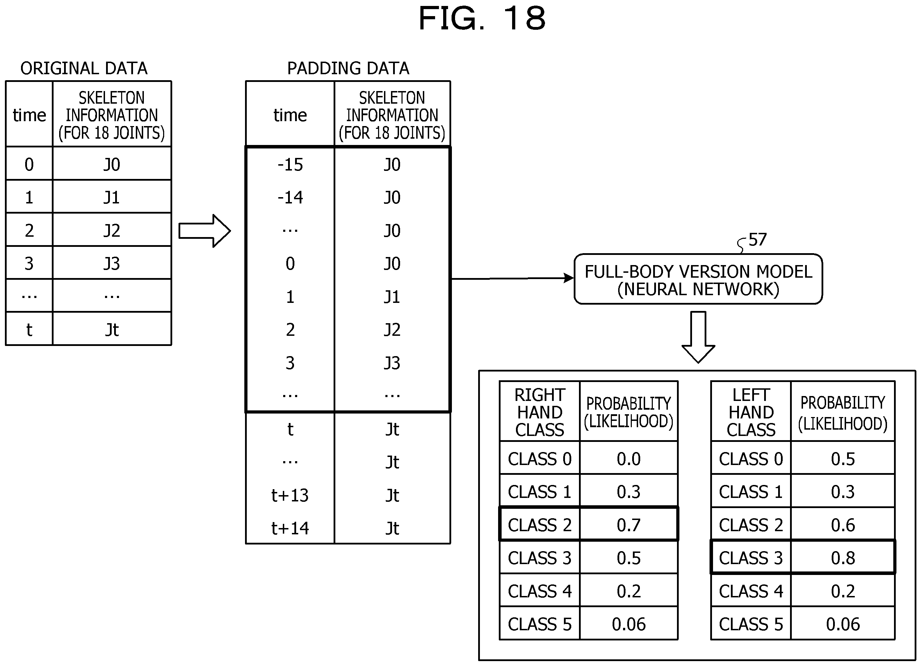

FIG. 18 is a diagram for explaining estimation of support positions according to the full-body version model 57. As illustrated in FIG. 18, the first estimation unit 63a performs data padding according to a method similar to that in FIG. 12 using the skeleton information for the 18 joints generated by the data generation unit 62 as original data and generates padding data. Then, the first estimation unit 63a acquires 30 frames from the beginning and inputs the joint information for the 18 joints for each of the 30 frames into the learned full-body version model 57.

Thereafter, the first estimation unit 63a acquires a "class 2" that has the highest probability among the probabilities of the right hand class and a "class 3" that has the highest probability among the probabilities of the left hand class from the output result of the full-body version model 57. Then, the first estimation unit 63a estimates "right hand = class 2 and left hand = class 3" as the wrist support positions of the performer 1. In this way, by inputting the frames as shifting the frames one by one, the first estimation unit 63a estimates the wrist support positions in each state during the performance.

Then, the first estimation unit 63a stores the estimation result in the storage unit 52. For example, the first estimation unit 63a stores a list of estimation results in which a first frame or a middle frame of the 30 input frames is associated with the support positions of the right and left wrists that are the estimation results in the storage unit 52.

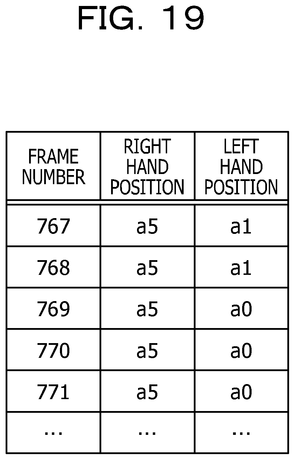

FIG. 19 is a diagram illustrating a list of support position estimation results according to the full-body version model 57. As illustrated in FIG. 19, the first estimation unit 63a generates a support position estimation result in which a "frame number", a "right hand position", and a "left hand position" are associated with each other. Here, the "frame number" indicates a frame used for estimation, the "right hand position" is an estimated class where the right wrist is positioned, and the "left hand position" is an estimated class where the left wrist is positioned. In the example in FIG. 19, it is illustrated that a right hand position "a5" and a left hand position "a1" are estimated with respect to a frame number "767".

The first technique recognition unit 63b is a processing unit that temporarily recognizes the technique performed by the performer 1 using the wrist positions estimated by the first estimation unit 63a or the like. Specifically, the first technique recognition unit 63b automatically temporarily recognizes each technique performed by the performer 1 by detecting a position of the body of the performer 1 or a posture between techniques, specifying front support or a landing position, determining a segment point, determining a basic motion using information between the segment points, or the like using the method disclosed in International Publication Pamphlet No. WO 2018/070414, and transmits the recognized techniques to the result integration unit 65.

For example, the first technique recognition unit 63b calculates vector data indicating a direction between the joints using the skeleton information of each frame and calculates a feature amount for specifying a direction and a motion of the body. Then, the first technique recognition unit 63b compares the calculated feature amount with a technique recognition rule that has been determined in advance and recognizes the technique. For example, the first technique recognition unit 63b calculates feature amounts A and B on the basis of the skeleton information between the segments and recognizes a technique A according to a combination of the feature amounts A and B.

Furthermore, the first technique recognition unit 63b specifies a place where the support position is changed as a segment point using the wrist support position estimation result by the first estimation unit 63a and specifies where the techniques are divided. Note that the first technique recognition unit 63b can recognize the technique using the learning model, which outputs a technique name using time-series position information of the wrists estimated by the first estimation unit 63a as an input, or the like. Note that the first technique recognition unit 63b can also store a technique recognition result, in which the recognized technique is associated with information regarding the frame corresponding to the information used to recognize the technique, in the storage unit 52.

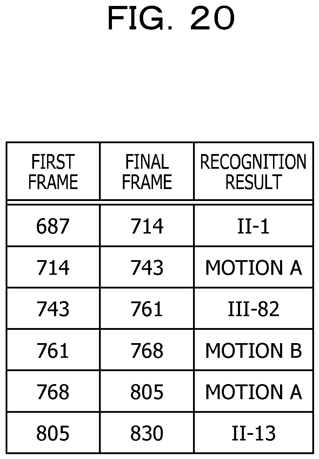

FIG. 20 is a diagram illustrating a list of recognition results using the full-body version model 57. As illustrated in FIG. 20, the first technique recognition unit 63b generates a list of recognition results in which a "first frame", a "final frame", and a "recognition result" are associated with each other. Here, the "first frame" indicates the beginning of the frames that are recognized as a technique, the "final frame" indicates the end of the frames that are recognized as a technique, and the "recognition result" indicates information regarding the recognized technique. In the example in FIG. 20, it is illustrated that a movement from a "frame 687" to a "frame 714" is recognized as a technique "II-1". Note that "Roman number-number" in FIG. 20 corresponds to a technique, and others are movements for connecting techniques or the like.

The second recognition unit 64 is a processing unit that includes a second estimation unit 64a and a second technique recognition unit 64b, estimates wrist support positions that are specific skeleton information from skeleton information for six joints, and recognizes a technique performed by the performer 1 on the basis of the result.

The second estimation unit 64a is a processing unit that estimates the wrist support positions of the performer 1 using the time-series skeleton information for the six joints of the performer 1 and the learned part version model 58. Specifically, the second estimation unit 64a inputs frames as many as the frames at the time of learning as a single piece of input data into the learned part version model 58 and estimates the wrist support positions of the performer 1 on the basis of the output result of the learned part version model 58. Furthermore, the second estimation unit 64a outputs the estimation result to the second technique recognition unit 64b and stores the estimation result in the storage unit 52.

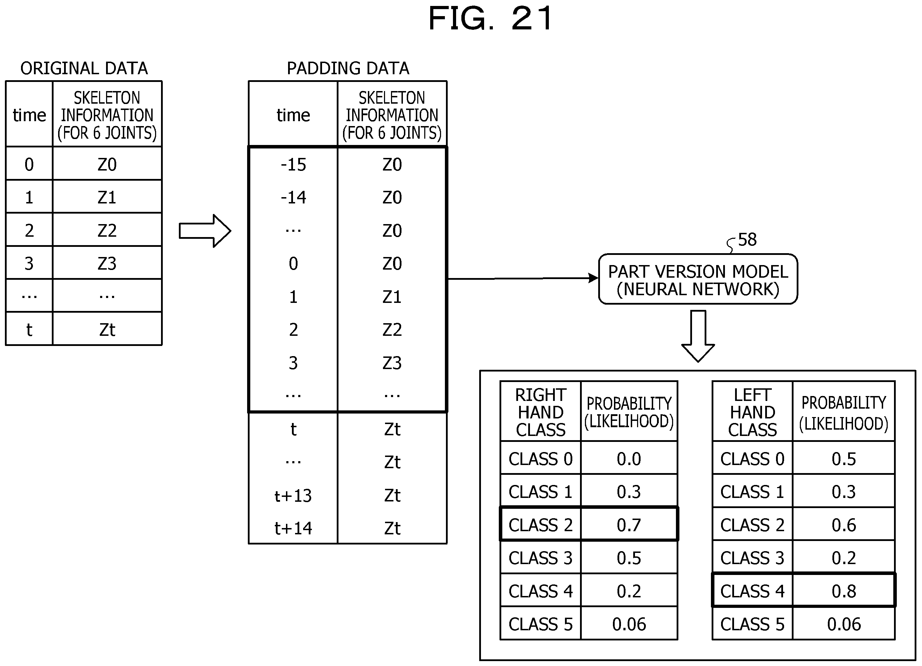

FIG. 21 is a diagram for explaining estimation of the support position according to the part version model 58. As illustrated in FIG. 21, the second estimation unit 64a acquires the skeleton information for the six joints described above of the skeleton information for the 18 joints generated by the data generation unit 62 as original data and generates padding data by performing data padding according to a method similar to that in FIG. 12. Then, the second estimation unit 64a acquires 30 frames from the beginning and inputs the joint information for six joints for each of the 30 frames into the learned part version model 58.

Thereafter, the second estimation unit 64a acquires a "class 2" that has the highest probability among the probabilities of the right hand class and a "class 4" that has the highest probability among the probabilities of the left hand class from the output result of the part version model 58. Then, the second estimation unit 64a estimates "right hand = class 2 and left hand = class 4" as the wrist support positions of the performer 1. In this way, by inputting the frames as shifting the frames one by one, the second estimation unit 64a estimates the wrist support positions in each state during the performance.

Then, the second estimation unit 64a stores the estimation result in the storage unit 52. For example, the second estimation unit 64a stores a list of estimation results in which a first frame or a middle frame of the 30 input frames is associated with the support positions of the right and left wrists that are the estimation results in the storage unit 52.

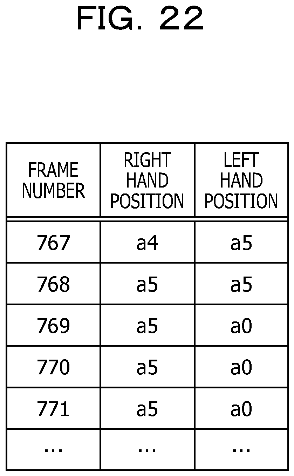

FIG. 22 is a diagram illustrating a list of support position estimation results according to the part version model 58. As illustrated in FIG. 22, the second estimation unit 64a generates a support position estimation result in which a "frame number", a "right hand position", and a "left hand position" are associated with each other, as in FIG. 19. In the example in FIG. 22, it is illustrated that a class "a4" is estimated as the right hand position and a class "a5" is estimated as the left hand position with respect to a frame number "767".

The second technique recognition unit 64b is a processing unit that temporarily recognizes the technique performed by the performer 1 using the wrist positions estimated by the second estimation unit 64a or the like. Specifically, the second technique recognition unit 64b automatically temporarily recognizes each technique performed by the performer 1 using a method similar to that of the first technique recognition unit 63b and transmits the recognized technique to the result integration unit 65.

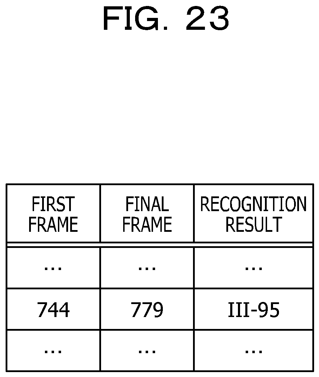

Furthermore, the second technique recognition unit 64b can also store a technique recognition result, in which the recognized technique is associated with information regarding the frame corresponding to the information used to recognize the technique, in the storage unit 52. FIG. 23 is a diagram illustrating a list of recognition results using the part version model 58. As illustrated in FIG. 23, the second technique recognition unit 64b generates a list of recognition results in which a "first frame", a "final frame", and a "recognition result" are associated with each other, as in FIG. 20. In the example in FIG. 23, it is illustrated that a movement from a "frame 744" to a "frame 779" is recognized as a technique "111-95".

The result integration unit 65 is a processing unit that includes a determination unit 65a, an integration unit 65b, and a re-recognition unit 65c and determines validity of the recognition results (temporal technique recognition) by the first recognition unit 63 and the second recognition unit 64. Specifically, the result integration unit 65 selects a result of an appropriate model from among the results of the temporal technique recognition of each model according to a learning status of each movement and skeleton.

The determination unit 65a is a processing unit that determines an appropriate estimation result from the estimation result of the full-body version model 57 and the estimation result of the part version model 58. Specifically, the determination unit 65a compares a selection level of the technique that is temporarily recognized by the first recognition unit 63 with a selection level of the technique that is temporarily recognized by the second recognition unit 64, determines the estimation result of the model with the higher selection level as an appropriate estimation result, and outputs the estimation result to the integration unit 65b or the like.

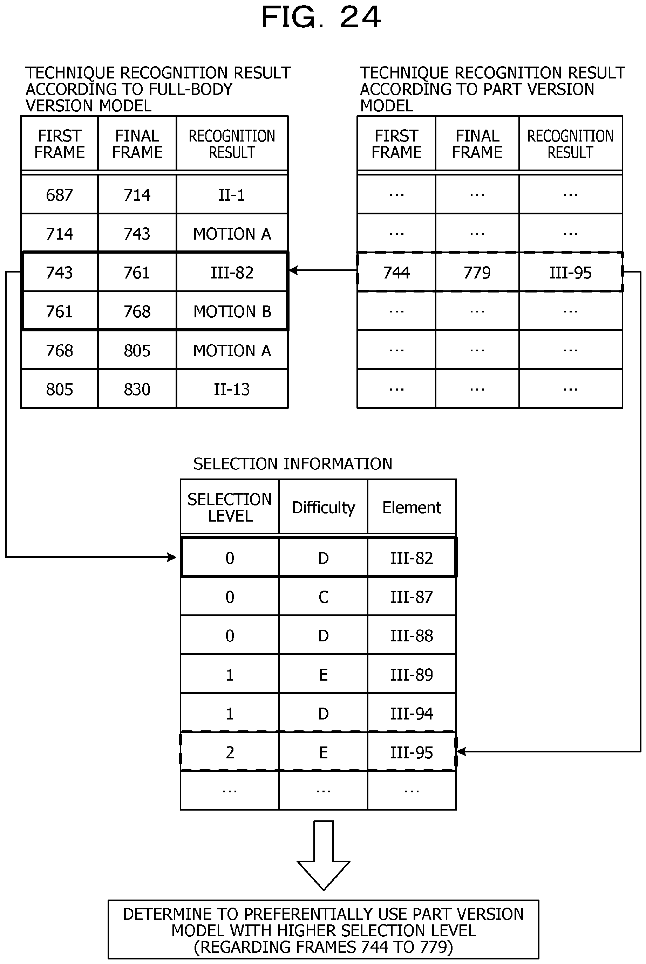

FIG. 24 is a diagram illustrating selection of estimation results. As illustrated in FIG. 24, the determination unit 65a extracts a frame of the full-body version model 57 included in a target frame of the part version model 58 that is recognized as a technique. At that time, the determination unit 65a may expand a range and extract preceding n frames and subsequent n frames. Note that n is an arbitrary number.

For example, the determination unit 65a refers to the technique recognition result of the part version model 58 by the second recognition unit 64 and specifies "the first frame (744), the final frame (779), the recognition result (111-95)" that is recognized as a technique. Subsequently, the determination unit 65a refers to the technique recognition result of the full-body version model 57 by the first recognition unit 63, and specifies "the first frame (743), the final frame (761), and the recognition result (111-82)" and "the first frame (761), the final frame (768), and the recognition result (motion B)" as the recognition results corresponding to "the first frame (744), the final frame (779)" recognized as the technique for the part version model 58.

Then, the determination unit 65a refers to the selection information 56 and specifies a selection level "2" corresponding to the technique (111-95) recognized according to the part version model 58 and a selection level "0" corresponding to the technique (111-82) recognized according to the full-body version model 57. Here, the determination unit 65a determines to preferentially use the recognition result of the part version model 58 with the higher selection level and outputs the result to the integration unit 65b. Note that, in a case where the selection level of the recognition result of the full-body version model 57 is higher, the determination unit 65a adopts the technique recognition result of the second recognition unit 64 and transmits the result to the scoring device 90.

The integration unit 65b is a processing unit that integrates the support position estimation result according to the full-body version model 57 and the support position estimation result according to the part version model 58. Specifically, in a case where the determination unit 65a determines to preferentially use the technique recognition result of the second recognition unit 64 using the part version model 58, the integration unit 65b integrates the support positions. In other words, the integration unit 65b replaces the support position estimation result in the frames used to recognize the technique that is preferentially used, of the support position estimation results using the full-body version model 57 with the estimation result of the part version model 58.

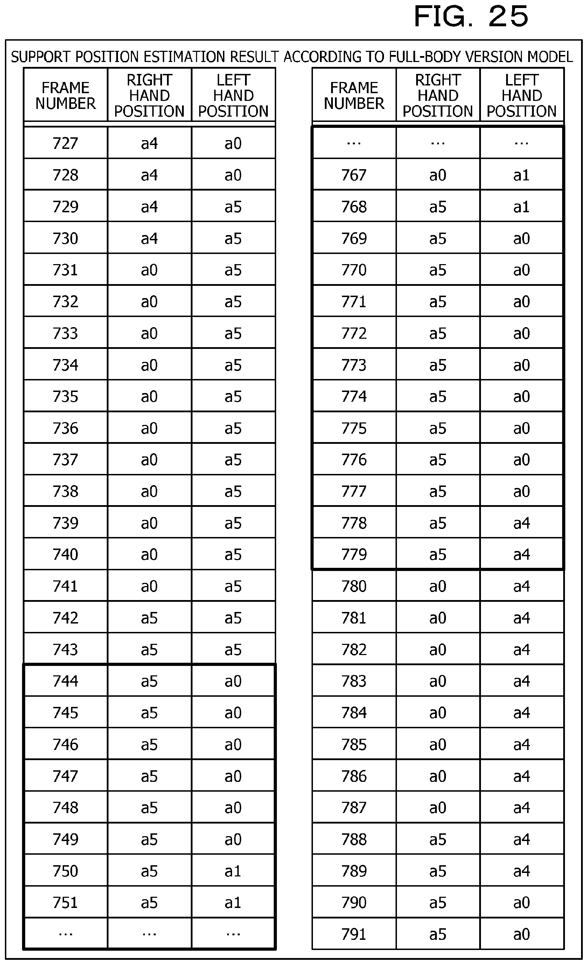

First, the integration unit 65b specifies a portion to be replaced (integration destination) from the estimation result of the full-body version model 57. FIG. 25 is a diagram for explaining an estimation result to be integrated, of the support position estimation results according to the full-body version model 57. As illustrated in FIG. 25, the integration unit 65b specifies the frames 744 to 779 that correspond to the recognition result "111-95" of the technique specified to be preferentially used in FIG. 24, from among the support position estimation results estimated using the full-body version model 57.

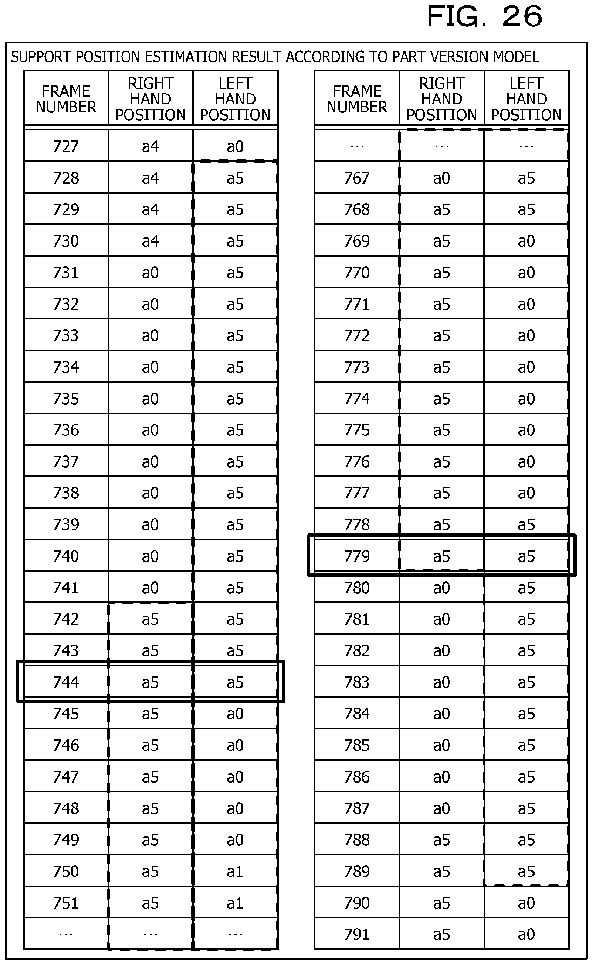

Next, the integration unit 65b specifies a portion (replacement target) in which the estimation result of the full-body version model 57 is updated, from among the estimation results of the part version model 58. FIG. 26 is a diagram for explaining an estimation result to be integrated, of the support position estimation results according to the part version model 58. As illustrated in FIG. 26, the integration unit 65b specifies the frames 744 to 779 that correspond to the recognition result "111-95" of the technique specified to be preferentially used in FIG. 24, from among the estimation results of the support positions estimated using the part version model 58 by the second estimation unit 64a.

At this time, the integration unit 65b selects frames from the earliest frame among continuous frames to the first frame in which the hands are placed to the latest frame among continuous frames after the final frame in which the hands are placed, as target frames. That is, in the example in FIG. 25, regarding the right hand, because the estimation results in the frames to the frame 742 previous to the first frame 744 are the same estimation results "right hand position = a5" and the estimation results in the frames after the final frame 779 are different from that in the previous frame 742, the integration unit 65b specifies "from the frame 742 to the frame 779" as the replacement target.

Similarly, regarding the left hand, because the estimation results in the frames to the frame 728 previous to the first frame 744 are the same estimation result "right hand position = a5" and the estimation results in the frames to the frame 798 after the final frame 779 are the same estimation result "right hand position = a5", the integration unit 65b specifies "from the frame 728 to the frame 789" as the replacement target.

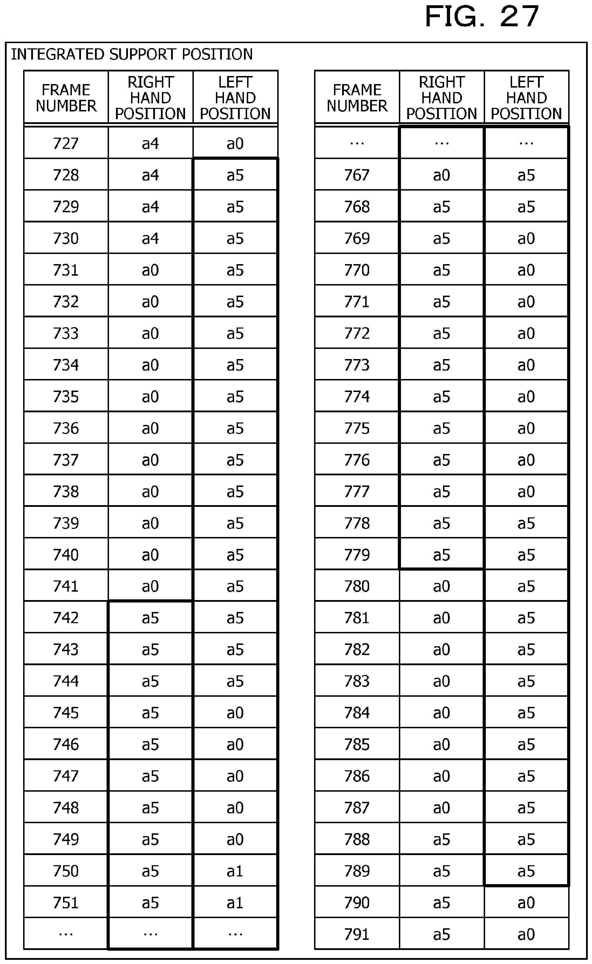

Thereafter, the integration unit 65b replaces the estimation result of the full-body version model 57 specified in FIG. 25 with the estimation result of the part version model 58 specified in FIG. 26 and integrates the support position estimation results. FIG. 27 is a diagram for explaining integration of the support positions. As illustrated in FIG. 27, the integration unit 65b replaces the support positions of the both hands "from the frame 744 to the frame 779" of the estimation result of the full-body version model 57 with the support position of the right hand "from the frame 742 to the frame 779" and the support position of the left hand "from the frame 728 to the frame 789" of the estimation result of the part version model 58.

At this time, although a range of the estimation result of the part version model 58 that is a replacement target is wider than a range of the estimation result of the full-body version model 57 to be replaced, it is determined that the part version model 58 is prioritized regarding this range. Therefore, the integration unit 65b expands the range of the replacement target of the full-body version model 57.

That is, as illustrated in FIG. 27, regarding the support position of the right hand, the integration unit 65b replaces "from the frame 742 to the frame 779" of the estimation result of the full-body version model 57 with "from the frame 742 to the frame 779" of the estimation result of the part version model 58. Furthermore, regarding the support position of the left hand, the integration unit 65b replaces "from the frame 728 to the frame 789" of the estimation result of the full-body version model 57 with "from the frame 728 to the frame 789" of the estimation result of the part version model 58.

Returning to FIG. 16, the re-recognition unit 65c is a processing unit that re-recognizes the technique using the integration result generated by the integration unit 65b. With reference to the example described above, the re-recognition unit 65c recognizes the technique with a method similar to that of the first technique recognition unit 63b using the support position in which the frame at the support position estimated using the full-body version model 57 by the first estimation unit 63a is updated as illustrated in FIG. 27.

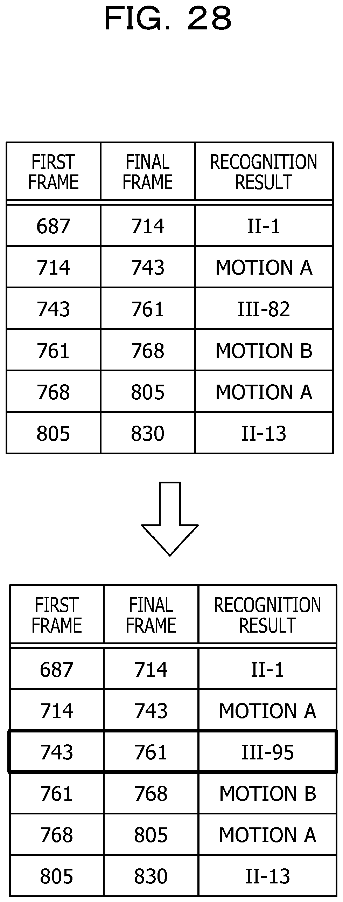

That is, the re-recognition unit 65c recognizes the technique in the entire performance again using the estimation results of the both-hand support positions for each frame that is newly generated. FIG. 28 is a diagram for explaining a re-recognition result of an integrated technique. As illustrated in FIG. 28, when the technique recognition results before and after the integration are compared, it is found that the recognition result "111-82" from the first frame "743" to the final frame "761" is changed to "111-95". In this way, although the re-recognition unit 65c basically recognizes the technique using the estimation result of the full-body version model 57, a frame with a low reliability in the estimation result of the full-body version model 57 is replaced with the estimation result of the part version model 58, and the technique recognition regarding the series of performance of the performer 1 can be performed.

### (Configuration of Scoring Device 90)

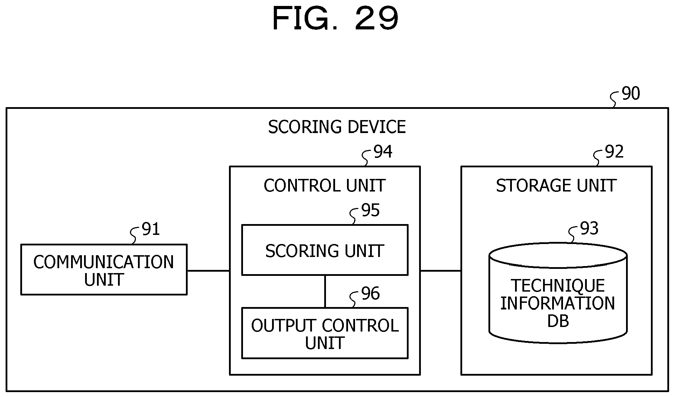

FIG. 29 is a functional block diagram illustrating a functional configuration of the scoring device 90 according to the first embodiment. As illustrated in FIG. 29, the scoring device 90 includes a communication unit 91, a storage unit 92, and a control unit 94. The communication unit 91 receives the technique recognition result, the wrist support position estimation result, the skeleton information of the performer (three-dimensional skeleton positional information), or the like from the recognition device 50.

The storage unit 92 stores data, a program executed by the control unit 94, or the like. For example, the storage unit 92 is implemented by a memory, a hard disk, or the like. This storage unit 92 stores technique information 93. The technique information 93 is information in which a technique name, a difficulty, a score, a position of each joint, an angle of a joint, a scoring rule, or the like are associated. Furthermore, the technique information 93 includes various types of other information used for scoring.

The control unit 94 is a processing unit that controls the entire scoring device 90 and can be implemented, for example, by a processor or the like. The control unit 94 includes a scoring unit 95 and an output control unit 96 and performs scoring of a performer according to information input from the recognition device 50 or the like. Note that the scoring unit 95 and the output control unit 96 can be implemented by an electronic circuit such as a processor or a process included in a processor or the like.

The scoring unit 95 is a processing unit that scores a technique of the performer or scores a performance of the performer. Specifically, the scoring unit 95 compares the technique recognition result, the wrist support position estimation result, the skeleton information of the performer, or the like transmitted from the recognition device 50 as needed with the technique information 93 and scores the technique or the performance performed by the performer 1. For example, the scoring unit 95 calculates a D score or an E score. Then, the scoring unit 95 outputs a scoring result to the output control unit 96. Note that the scoring unit 95 can perform scoring using widely-used scoring rules.

The output control unit 96 is a processing unit that displays, for example, the scoring result of the scoring unit 95 on a display or the like. For example, the output control unit 96 acquires various types of information such as the distance image captured by each 3D laser sensor, the three-dimensional skeleton information, each piece of image data during the performance of the performer 1, or the scoring result from the recognition device 50 to display the acquired various types of information on a predetermined screen.

### [Flow of Learning Processing]

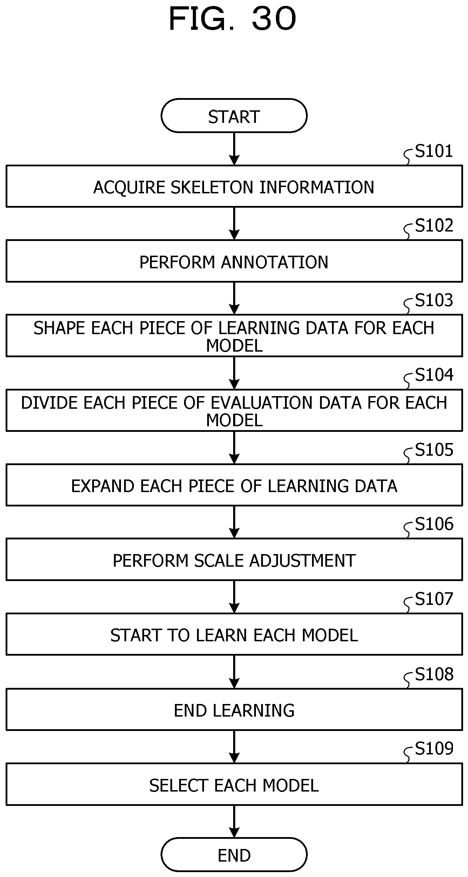

FIG. 30 is a flowchart illustrating a flow of learning processing according to the first embodiment. Note that respective models can be learned in parallel or in order.

As illustrated in FIG. 30, the acquisition unit 21 of the learning device 10 acquires each piece of skeleton information included in each piece of the skeleton data 15 (S101), and the first learning processing unit 22 or the second learning processing unit 23 performs annotation for generating correct answer information regarding the support positions of the both wrists (S102).

Subsequently, the first learning processing unit 22 or the second learning processing unit 23 shapes each piece of learning data for each model by performing division into frames having a certain section or performing padding (S103). Then, the first learning processing unit 22 or the second learning processing unit 23 divides the learning data into each piece of learning data (training data) for each model to be used for training and evaluation data for each model to be used for evaluation (S104).

Thereafter, the first learning processing unit 22 or the second learning processing unit 23 performs learning data expansion including a rotation and a reverse for each coordinate axis of a pommel horse instrument, addition of random noise, adjustment of distribution of correct values of the support position, or the like (S105). Subsequently, the first learning processing unit 22 or the second learning processing unit 23 performs scale adjustment including normalization, standardization, or the like (S106).

Then, the first learning processing unit 22 or the second learning processing unit 23 determines an algorithm, a network, a hyperparameter, or the like of each model to be learned and learns each model using each piece of the learning data (S107). At this time, the first learning processing unit 22 or the second learning processing unit 23 evaluates learning accuracy (evaluation error) of each model being learned using the evaluation data for each epoch.

Thereafter, when a predetermined condition is satisfied, for example, when the number of times of learning exceeds a threshold or the evaluation error becomes equal to or less than a certain value, the first learning processing unit 22 or the second learning processing unit 23 ends learning (S108). Then, the first learning processing unit 22 or the second learning processing unit 23 selects each model when the evaluation error is the smallest (S109).

### [Automatic Scoring Processing]

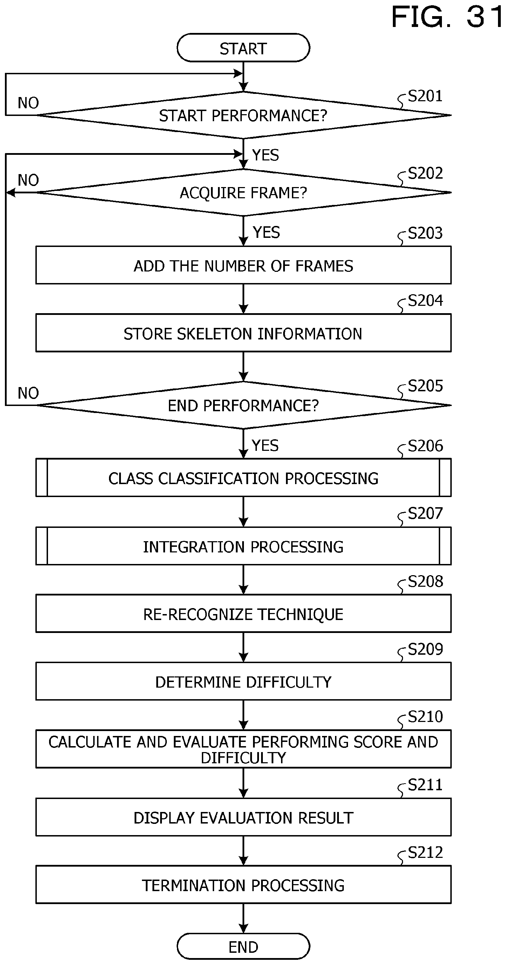

FIG. 31 is a flowchart illustrating a flow of automatic scoring processing according to the first embodiment. Note that, here, as an example, an example will be described in which automatic scoring processing is executed after a performance ends. However, the automatic scoring processing can be executed during the performance.

As illustrated in FIG. 31, when the performance is started (S201: Yes), the recognition device 50 acquires a frame including an image captured by the 3D laser sensor 5 (S202).

Subsequently, when acquiring the frame (S202: Yes), the recognition device 50 adds the number of frames (S203), and acquires skeleton information or the like and manages the skeleton information in association with a frame number (S204). Here, until the performance ends (S205: No), the recognition device 50 repeats the processing in and subsequent to S201.

Then, when the performance ends (S205: Yes), the recognition device 50 executes class classification processing and performs temporal technique recognition using the both hand support position estimation result in each captured frame and the estimation result of each model (S206). Moreover, the recognition device 50 executes integration processing using the result of the temporal technique recognition (S207).

Thereafter, the recognition device 50 detects the position and the posture of the body of the performer using the integration result, the skeleton information in the skeleton data 55, or the like, executes setting of a front support flag and a landing flag, determination of a segment point, determination of a basic motion, or the like, and re-recognizes the technique performed by the performer 1 (S208).

Then, the scoring device 90 determines a difficulty using the re-recognized technique or the like (S209) and evaluates a performance performing score and calculates an E score (S210). Thereafter, the scoring device 90 displays the evaluation result (S211) and executes termination processing including resetting of various flags, counts, or the like used for scoring (S212).

### (Class Classification Processing)

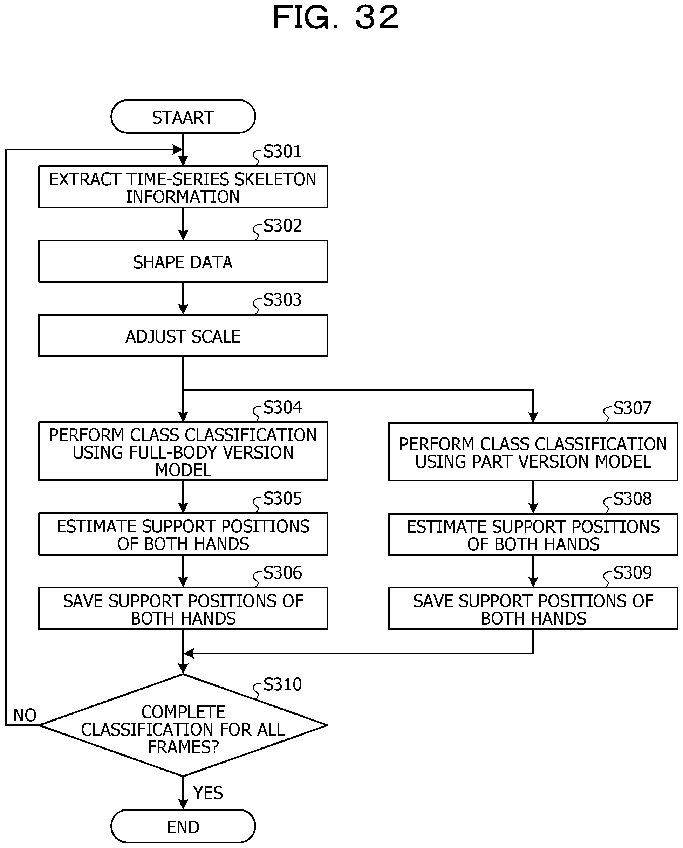

FIG. 32 is a flowchart illustrating a flow of class classification processing. This processing is executed in S206 in FIG. 31.

As illustrated in FIG. 32, the first recognition unit 63 and the second recognition unit 64 extracts time-series skeleton information from the acquired skeleton data 35 or the like (S301) and executes data shaping such as padding as at the time of learning (S302) and performs scale adjustment (S303). Note that the first recognition unit 63 extracts the skeleton information of the whole body (18 joints), and the second recognition unit 64 extracts the skeleton information of the six joints described above.

Thereafter, the first recognition unit 63 inputs the extracted skeleton information into the learned full-body version model 57 and performs class classification (S304). Subsequently, the first recognition unit 63 estimates the support positions of the both hands of the performer 1 through class classification (S305) and saves the skeleton information (frame) and the estimated support positions of the both hands in association with each other (S306).

On the other hand, the second recognition unit 64 inputs the extracted skeleton information into the learned part version model 58 and performs class classification (S307). Subsequently, the second recognition unit 64 estimates the support positions of the both hands of the performer 1 through class classification (S308) and saves the skeleton information (frame) and the estimated support positions of the both hands in association with each other (S309).

Then, until class classification is performed on all the frames (S310: No), the processing in and subsequent to S301 is repeated, and when the class classification is performed on all the frames (S310: Yes), the class classification processing ends.

### (Integration Processing)

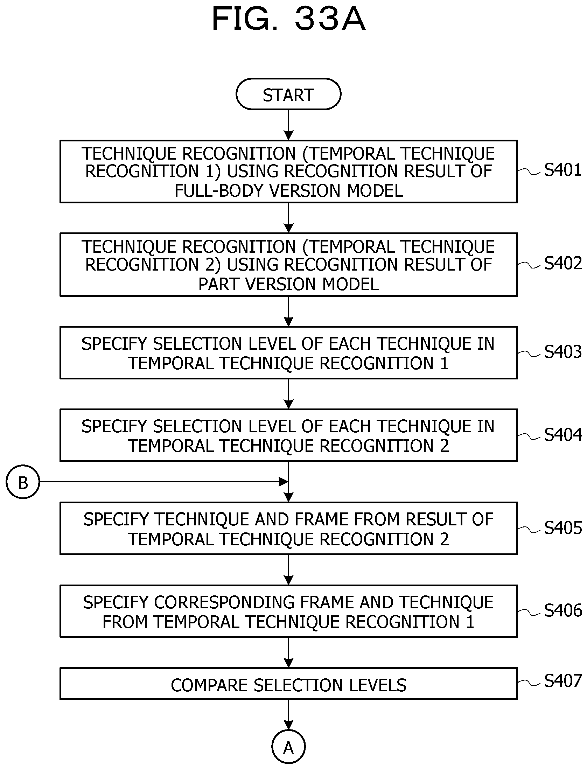

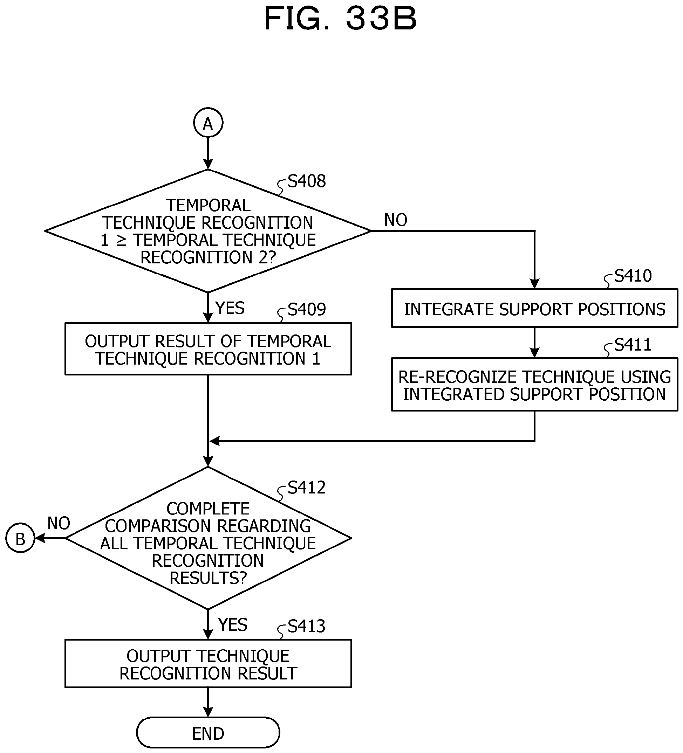

FIG. 33 (i.e., FIGs. 33A and 33B) is a flowchart illustrating a flow of integration processing. This processing is executed in S207 in FIG. 31.

As illustrated in FIG. 33, the first recognition unit 63 performs technique recognition (temporal technique recognition 1) using the estimation result of the full-body version model 57 or the like (S401), and the second recognition unit 64 performs technique recognition (temporal technique recognition 2) using the estimation result of the part version model 58 or the like (S402).

Subsequently, the result integration unit 65 specifies a selection level of each technique in the temporal technique recognition 1 (S403) and specifies a selection level of each technique in the temporal technique recognition 2 (S404). Then, the result integration unit 65 specifies a technique and a frame corresponding to the technique from the recognition result of the temporal technique recognition 2 (S405). Subsequently, the result integration unit 65 specifies a frame corresponding to the frame specified from the temporal technique recognition 2 and the recognized technique from the recognition result of the temporal technique recognition 1 (S406).

Thereafter, the result integration unit 65 compares the selection level of the technique specified from the temporal technique recognition 2 and the selection level of the technique specified from the temporal technique recognition 1 (S407). Here, in a case where the selection level of the technique of the temporal technique recognition 1 is equal to or higher than the selection level of the technique of the temporal technique recognition 2 (S408: Yes), the result integration unit 65 selects the result of the temporal technique recognition 1 (S409).

On the other hand, in a case where the selection level of the technique of the temporal technique recognition 1 is lower than the selection level of the technique of the temporal technique recognition 2 (S408: No), the result integration unit 65 integrates the estimated support positions using the estimation result (support position) of the part version model 58 (S410).

Thereafter, the result integration unit 65 re-recognizes the technique using the integrated support position (S411). Then, until the comparison regarding each technique recognized in the temporal technique recognition 2 is completed (S412: No), the result integration unit 65 repeats the processing in and subsequent to S405. On the other hand, when the comparison regarding all the techniques recognized in the temporal technique recognition 2 is completed (S412: Yes), the result integration unit 65 outputs the result of the completed technique recognition to the scoring device 90 (S413).

### [Effects]

As described above, the recognition device 50 can determine the support position using a class classifier using not only the position information of the joint to be identified such as the wrists at the time of performing the pommel horse but also time-series information of the joint position regarding the person's motion such as the head, the shoulders, the spine, the elbows, the waist, the knees, and the ankles as an input. Furthermore, by using the full-body version model 57 and the part version model 58, the recognition device 50 can not only recognize the technique from the skeleton information of the whole body but also recognize the technique from some pieces of skeleton information related to the technique. Therefore, even in a case where an unknown posture or movement that is not included in the learning data occurs, technique recognition with higher accuracy can be performed than technique recognition using a single model.

For example, the recognition device 50 uses the full-body version model 57 using the joint coordinates of the whole body and the part version model 58 using the joint coordinates near the support portions, and performs technique recognition using the result of the full-body version model 57 for a learned technique and using the result of the part version model 58 for an unlearned technique. As a result, a part of the unlearned techniques do not deteriorate the recognition of the technique that has been originally correct, the techniques can be correctly recognized.

In other words, by using the plurality of learning result models using different joints together and using a different model properly according to the learning status of the motion or the posture and integrating the models, the automatic scoring system can realize more robust support position recognition and technique recognition. Therefore, the automatic scoring system can recognize the performance using the skeleton information of the performer 1 and the accurate support positions, and the recognition accuracy can be improved. Furthermore, a correct automatic scoring result can be provided to a referee by improving the recognition accuracy, and fairness and accuracy of scoring can be guaranteed.

### [Second Embodiment]

### [Another Example of Integration Processing]

For example, if the recognition results of the support positions of the plurality of models are mixed when the support positions are integrated as described above, it is considered that a status occurs in which techniques (unintended technique) before and after a technique to be determined change according to a learning status. In this case, because there is a risk that techniques before and after a technique that is correctly recognized are replaced with wrong techniques, the technique that is not changed is selected in this case.

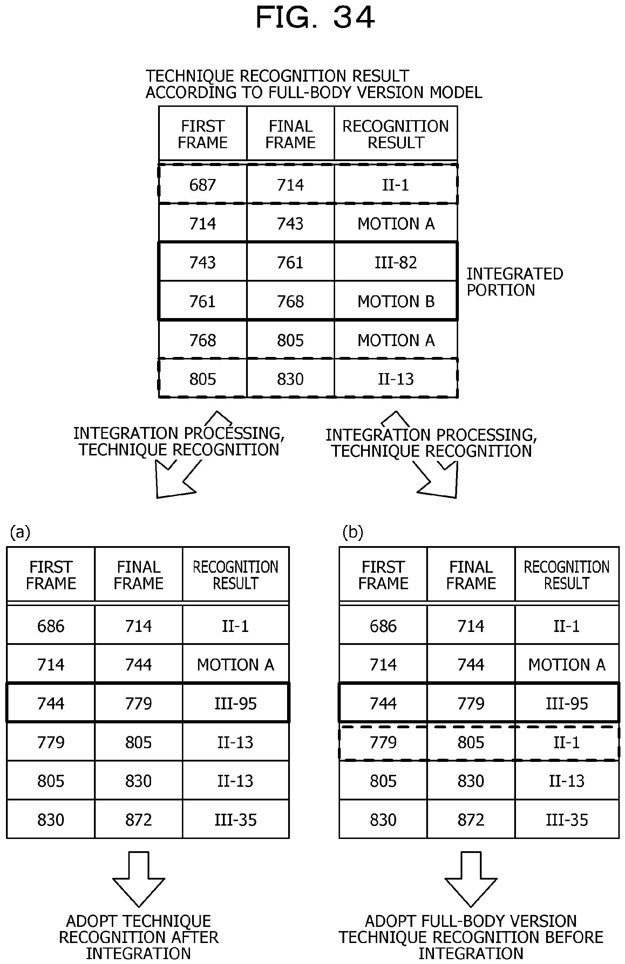

FIG. 34 is a diagram for explaining integration processing according to a second embodiment. As illustrated in FIG. 34, it is assumed that a result integration unit 65 of a recognition device 50 determine a range from a frame 743 to a frame 768 of results of technique recognition (temporal technique recognition) using a support position estimation result according to a full-body version model 57 as an integration target. From the frame 743 to the frame 768, a technique "111-82" is recognized, a technique "II-1" is recognized in a frame previous to the frames, and a technique "11-13" is recognized after the frames.

Then, as illustrated in (a) of FIG. 34, in a case where technique recognition results before and after the frame to be integrated have no change before and after the integration as a result of technique recognition using the integrated support position, the result integration unit 65 adopts the result of the technique recognition using the integrated support position. Specifically, because a technique "111-95" is recognized from the frame 744 to the frame 779 including the frame to be integrated, the results of the technique recognition before and after the integration are different. Furthermore, the technique "11-1" similar to that before the integration is recognized before the technique "111-95", and the technique "11-13" similar to that before the integration is recognized after the technique "111-95".

As a result, the result integration unit 65 determines that the techniques before and after the technique that is correctly recognized remain to be the same and the technique in an integration target position with low accuracy is changed, and transmits the result of the technique recognition using the integrated support position to the scoring device 90.

On the other hand, as illustrated in (b) of FIG. 34, in a case where technique recognition results before and after the frame to be integrated have been changed before and after the integration as a result of technique recognition using the integrated support position, the result integration unit 65 adopts the result of the technique recognition using the support position of the full-body version model 57 before the integration. Specifically, because a technique "111-95" is recognized from the frame 744 to the frame 779 including the frame to be integrated, the results of the technique recognition before and after the integration are different. Furthermore, the technique "II-1" similar to that before the integration is recognized before the technique "111-95", and the technique "II-1" different from that before the integration is recognized after the technique "111-95".

As a result, the result integration unit 65 determines that there is a high possibility that techniques before and after the technique that has been correctly recognized are changed and wrong technique recognition is performed, and transmits a result of the technique recognition using the support position of the full-body version model 57 before the integration to the scoring device 90.

In this way, while the recognition device 50 improves recognition accuracy by using a strength of each of the plurality of models that uses different joints, the recognition device 50 can finally recognize the technique after determining deterioration in the reliability due to the integration.

### [Third Embodiment]

While the embodiments of the present invention have been described above, the embodiment may be implemented in various different modes in addition to the embodiments described above.

### [Application Example]

In the above embodiments, the gymnastics competition has been described as an example, but the present invention is not limited to this and may be applied to other competitions in which athletes perform a series of techniques and referees score the techniques. Examples of the other competitions include figure skating, rhythmic gymnastics, cheerleading, swimming diving, karate kata, and mogul air, or the like. Furthermore, in the embodiments described above, an example has been described in which the support positions of the both wrists are estimated. However, the present invention is not limited to this and can be applied to estimation of a joint position of any one of 18 joints, a position between joints, or the like.

### [3D Laser Sensor]

The 3D laser sensor 5 is an example of an imaging device, and a video camera or the like may be used. In a case where the video camera is used, the distance images 13 and 53 are RGB images. As a method for obtaining skeleton information from the RGB image, a known technique such as OpenPose can be used.

### [Skeleton Information]

Furthermore, in the embodiments described above, the position of each joint has been indicated and described as an example of the skeleton information. However, the skeleton information is not limited to this, and a direction (vector) between the joints, an angle of each joint, the directions of the limbs, the direction of the face, or the like can be adopted. Furthermore, an example has been described in which the skeleton information of the six joints is used to learn the part version model 17. However, the number of joints and the joint to be used can be arbitrarily set and changed, and it is preferable to select joints that affect the difficulty, workmanship, or the like of the technique.

Furthermore, the number of joints used to learn the full-body version model is not limited to 18 joints and can be arbitrarily changed. Similarly, although the number of joints used to learn the part version model is not limited to six joints and can be arbitrarily changed, it is preferable that the number of joints be less than the number of joints used to learn the full-body version model.

### [Numerical Values, Etc.]

The numerical values and the like used in the above embodiments are merely examples, do not limit the embodiments, and may be arbitrarily set and changed. Furthermore, the technique name, the number of frames, the number of classes, or the like are examples, and can be arbitrarily set and changed. Furthermore, not only the neural network but also various types of machine learning and deep learning can be used for the model. Furthermore, the order of each flowchart describing the flow of the processing can be changed within a consistent range.

### [Class Classification]

In the embodiments described above, an example has been described in which a support position of a specific joint is estimated using each model to which machine learning such as the neural network is applied. However, the present invention is not limited to this. For example, by defining a rule using 18 joints in which positions of both wrists to be estimated are associated with remaining 16 joint positions and using the definition, it is possible to estimate the positions of the both wrists from the skeleton information of the 18 joints without using the model described above. Similarly, it is possible to estimate the positions of the both wrists using a definition, using some joints, in which the positions of the both wrists to be estimated are associated with the six joint positions described above.

### [Integration of Support Positions]

In the embodiments described above, an example has been described in which the integration processing is executed after the technique recognition (temporal technique recognition) using the support position estimation result of each model. However, the present invention is not limited to this. For example, it is possible to compare and integrate the support positions estimated by each model. As an example, in a case where the support position of the full-body version model 57 is referred and support positions that are impossible in terms of a time-series order are estimated, it is possible to replace only that portion with the estimation result of the part version model 58.

For example, in a case where a state which does not hold physical continuity occurs such as a case where the class 5 (a5) suddenly continues a predetermined number of times in a state where the support position of the right hand is continued to the class 1 (a1), this can be replaced with the estimation result of the part version model 58. Note that the impossible status can be defined in advance as a rule.

### [The Number of Frames]

In the embodiments described above, each model is learned or the estimation according to each model is performed using the preset number of frames such as 30 as the number of time-series frames. However, the present invention is not limited to this. For example, it is possible to learn each model or perform the estimation according to each model using the number of frames in units of a predetermined movement such as a performance or a technique.

### [Selection level]

For example, if a class of a support position is wrong in the middle of a long continuous motion, there is a case where a technique is partially established before or after the mistake. In that case, the established technique is generally a technique with a lower difficulty than a long continuous motion. Therefore, when the class of the support position is recognized using a plurality of learning results, in a case where a long motion and a short motion are recognized in the same section, there is a high possibility that the long motion is correct. A selection level may be set in consideration of this and a type of the technique (for example, that is technique of the same type having one more number of rotations or the like).

### [System]

Pieces of information including a processing procedure, a control procedure, a specific name, various types of data, and parameters described above or illustrated in the drawings may be optionally changed unless otherwise specified.

Furthermore, each component of each device illustrated in the drawings is functionally conceptual, and is not needed to be physically configured as illustrated in the drawings. For example, specific forms of distribution and integration of individual devices are not limited to those illustrated in the drawings. That is, all or a part of the devices may be configured by being functionally or physically distributed or integrated in optional units depending on various types of loads, usage situations, or the like. Furthermore, each 3D laser sensor may be built in each device or may be connected through communication or the like as an external device of each device.

For example, the technique recognition and the combination evaluation can be respectively achieved by different devices. Furthermore, the learning device 10, the recognition device 50, and the scoring device 90 can be implemented by any combination of devices. Note that the acquisition unit 61 is an example of an acquisition unit, the first estimation unit 63a is an example of a first estimation unit, and the second estimation unit 64a is an example of a second estimation unit. The determination unit 65a is an example of a determination unit, and the re-recognition unit 65c is an example of a recognition unit and an output unit.

### [Hardware]

Next, a hardware configuration of a computer such as the learning device 10, the recognition device 50, or the scoring device 90 will be described. Note that, because each device has a similar configuration, here, a computer 100 will be described, and the recognition device 50 will be exemplified as a specific example.

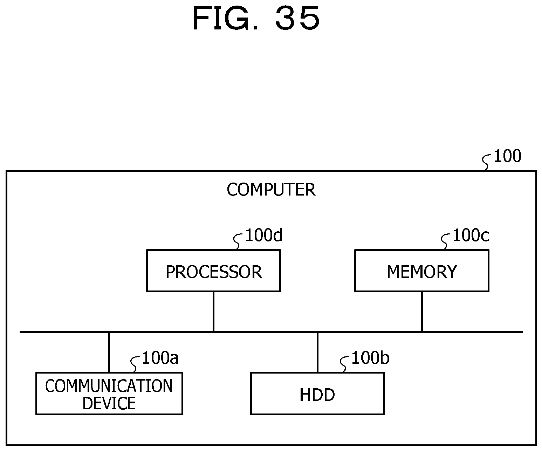

FIG. 35 is a diagram for describing a hardware configuration example. As illustrated in FIG. 35, the computer 100 includes a communication device 100a, a hard disk drive (HDD) 100b, a memory 100c, and a processor 100d. Furthermore, the individual units illustrated in FIG. 32 are mutually connected by a bus or the like. Note that, as the HDD, a storage device such as a solid state drive (SSD) may be used.

The communication device 100a is a network interface card or the like and communicates with another server. The HDD 100b stores a program that activates the functions illustrated in FIG. 16 or the like, and a DB.

The processor 100d reads a program that executes processing similar to that of each processing unit illustrated in FIG. 16 from the HDD 100b or the like, and develops the read program in the memory 100c, thereby activating a process that performs each function described with reference to FIG. 16 or the like. In other words, this process executes a function similar to the function of each processing unit included in the recognition device 50. Specifically, when the recognition device 50 is used as an example, the processor 100d reads a program having functions similar to the acquisition unit 61, the data generation unit 62, the first recognition unit 63, the second recognition unit 64, the result integration unit 65, or the like from the HDD 100b or the like. Then, the processor 100d executes a process for executing processing similar to the acquisition unit 61, the data generation unit 62, the first recognition unit 63, the second recognition unit 64, the result integration unit 65, or the like.

In this way, the computer 100 operates as an information processing device that performs a recognition method by reading and executing the program. Furthermore, the computer 100 may also implement functions similar to those of the embodiments described above by reading the program described above from a recording medium using a medium reading device and executing the read program described above. Note that this program mentioned in another embodiment is not limited to being executed by the computer 100. For example, the present invention may be similarly applied to a case where another computer or server executes the program, or a case where these computer and server cooperatively execute the program.

### CITATION LIST

### PATENT DOCUMENT

Patent Document 1: International Publication Pamphlet No. WO 2018/070414

### REFERENCE SIGNS LIST

- 10: learning device
- 11: communication unit
- 12: storage unit
- 13: distance image
- 14: skeleton definition
- 15: skeleton data
- 16: full-body version model
- 17: part version model
- 20: control unit
- 21: acquisition unit
- 22: first learning processing unit
- 22a: first generation unit
- 22b: first learning unit
- 23: second learning processing unit
- 23a: second generation unit
- 23b: second learning unit
- 50: recognition device
- 51: communication unit
- 52: storage unit
- 53: distance image
- 54: skeleton definition
- 55: skeleton data
- 56: selection information
- 57: full-body version model
- 58: part version model
- 60: control unit
- 61: acquisition unit
- 62: data generation unit
- 63: first recognition unit
- 63a: first estimation unit
- 63b: first technique recognition unit
- 64: second recognition unit
- 64a: second estimation unit
- 64b: second technique recognition unit
- 65: result integration unit
- 65a: determination unit
- 65b: integration unit
- 65c: re-recognition unit

## Claims

1. A motion recognition method implemented by a computer, the motion recognition method comprising:
acquiring skeleton information in a time series manner based on position information of each of a plurality of joints that includes a specific joint of a subject who performs a motion;
estimating, by using position information of a first joint group of the plurality of joints included in each piece of the time-series skeleton information, a region where the specific joint is positioned, of a plurality of regions obtained by dividing a region of an object used for the motion;
estimating a region where the specific joint is positioned by using position information of a second joint group that includes the specific joint and is a part of the first joint group, of the plurality of joints included in each piece of the time-series skeleton information;
determining the region where the specific joint is positioned on the basis of each estimation result where the estimated specific joint is positioned;
recognizing the motion of the subject by using the time-series skeleton information and the determined region where the specific joint is positioned; and
outputting a recognition result.

2. The motion recognition method according to claim 1, wherein the estimating processing estimates the region where the specific joint is positioned by using a first model that outputs a likelihood that an input of the position information of the first joint group corresponds to each class that indicates the plurality of regions, and
the estimating processing estimates the region where the specific joint is positioned by using a second model that outputs a likelihood that an input of the position information of the second joint group corresponds to each class.

3. The motion recognition according to claim 2, wherein the determining processing recognizes a first motion of the subject by using an estimation result of the first model, recognizes a second motion of the subject by using an estimation result of the second model, and in a case where the first motion does not match the second motion, determines the estimation result of the second model as the region where the specific joint is positioned.

4. The motion recognition method according to claim 3, wherein the estimating processing generates a first estimation result obtained by estimating the region where the specific joint is positioned in a time series manner from each output result obtained by inputting the time-series skeleton information acquired when the motion is performed by a predetermined number of pieces into the first model,
the estimating processing generates a second estimation result obtained by estimating the region where the specific joint is positioned in a time series manner from each output result obtained by inputting the time-series skeleton information by the predetermined number of pieces into the second model,
the determining processing recognizes the time-series first motion by using the first estimation result and recognizes the time-series second motion by using the second estimation result,
an estimation result, of the first estimation result, that is used to recognize the first motion that does not match the second motion is replaced with an estimation result used to recognize the second motion, and the first estimation result is updated, and
the recognizing processing recognizes a series of motions performed by the subject by using the updated first estimation result and the time-series skeleton information.

5. The motion recognition method according to claim 4, wherein the recognizing processing compares the series of motions recognized using the first estimation result before update with the series of motions recognized using the updated first estimation result, and in a case where the motion recognized before the updated estimation result does not match the motion recognized after the updated estimation result, the series of motions recognized using the first estimation result before update is adopted, and
the outputting processing outputs the series of adopted motions.

6. The motion recognition method according to claim 2, wherein
the estimating processing estimates the region where the specific joint is positioned by using the first model learned by using learning data with time-series skeleton information of the first joint group as an explanatory variable and a class where the specific joint is positioned as an objective variable, and
estimating processing estimates the region where the specific joint is positioned by using the second model learned by using learning data with time-series skeleton information of the second joint group as an explanatory variable and a class where the specific joint is positioned as an objective variable.

7. The motion recognition method according to claim 1, wherein
the motion is a performance of gymnastics,
the subject is a performer of the gymnastics,
the object is an instrument used for the gymnastics, and
the recognizing processing recognizes a technique performed by the performer by using the time-series skeleton information and the determined position of the specific joint.

8. The motion recognition method according to any one of claims 1 to 7, wherein
the first joint group includes all of the plurality of joints, and
the second joint group includes at least left and right wrists as the specific joint.

9. A motion recognition program comprising instructions which, when executed by a computer, cause the computer to execute processing comprising:
acquiring skeleton information in a time series manner based on position information of each of a plurality of joints that includes a specific joint of a subject who performs a motion;
estimating, by using position information of a first joint group of the plurality of joints included in each piece of the time-series skeleton information, a region where the specific joint is positioned, of a plurality of regions obtained by dividing a region of an object used for the motion;
estimating a region where the specific joint is positioned by using position information of a second joint group that includes the specific joint and is a part of the first joint group, of the plurality of joints included in each piece of the time-series skeleton information;
determining the region where the specific joint is positioned on the basis of each estimation result where the estimated specific joint is positioned;
recognizing the motion of the subject by using the time-series skeleton information and the determined region where the specific joint is positioned; and
outputting a recognition result.

10. An information processing apparatus of motion recognition, the information processing apparatus comprising:
an acquisition unit that acquires skeleton information in a time series manner based on position information of each of a plurality of joints that includes a specific joint of a subject who performs a motion;
a first estimation unit that estimates, by using position information of a first joint group of the plurality of joints included in each piece of the time-series skeleton information, a region where the specific joint is positioned, of a plurality of regions obtained by dividing a region of an object used for the motion;
a second estimation unit that estimates a region where the specific joint is positioned by using position information of a second joint group that includes the specific joint and is a part of the first joint group, of the plurality of joints included in each piece of the time-series skeleton information;
a determination unit that determines the region where the specific joint is positioned on the basis of each estimation result where the estimated specific joint is positioned;
a recognition unit that recognizes the motion of the subject by using the time-series skeleton information and the determined region where the specific joint is positioned; and
an output unit that outputs a recognition result.
